(19) Europäisches Patentamt / European Patent Office / Office européen des brevets

(11) **EP 4 035 302 B1**

(12) **EUROPEAN PATENT SPECIFICATION**

(45) Date of publication and mention
of the grant of the patent:
**08.02.2023 Bulletin 2023/06**

(21) Application number: **21745407.3**

(22) Date of filing: **31.05.2021**

(51) International Patent Classification (IPC):
*H04L 9/08* $^{(1990.01)}$   *G21K 1/00* $^{(1968.09)}$
*H05H 3/02* $^{(1980.01)}$

(52) Cooperative Patent Classification (CPC):
**H04L 9/0855; G21K 1/00**

(86) International application number:
**PCT/IB2021/054747**

(87) International publication number:
**WO 2021/245529 (09.12.2021 Gazette 2021/49)**

(54) **A SYSTEM FOR GENERATING POLARISATION-ENTANGLED PHOTON PAIRS FOR REPEATING A QUANTUM SIGNAL OVER A DISTANCE AND A METHOD FOR GENERATING POLARISATION-ENTANGLED PHOTON PAIRS IN A MULTI-MODE QUANTUM MEMORY FOR REPEATING A QUANTUM SIGNAL OVER A DISTANCE**

SYSTEM ZUR ERZEUGUNG VON POLARISATIONSVERSCHRÄNKTEN PHOTONENPAAREN ZUR WIEDERHOLUNG EINES QUANTENSIGNALS ÜBER EINEN ABSTAND UND EIN VERFAHREN ZUR ERZEUGUNG VON POLARISATIONSVERSCHRÄNKTEN PHOTONENPAAREN IN EINEM MULTIMODUS-QUANTENSPEICHER ZUR WIEDERHOLUNG EINES QUANTENSIGNALS ÜBER EINEN ABSTAND

SYSTÈME DE GÉNÉRATION DE PAIRES DE PHOTONS INTRIQUÉS EN POLARISATION POUR LA RÉPÉTITION D'UN SIGNAL QUANTIQUE SUR UNE CERTAINE DISTANCE, ET PROCÉDÉ DE GÉNÉRATION DE PAIRES DE PHOTONS INTRIQUÉS EN POLARISATION DANS UNE MÉMOIRE QUANTIQUE MULTIMODE POUR LA RÉPÉTITION D'UN SIGNAL QUANTIQUE SUR UNE CERTAINE DISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2020 PL 43414220**

(43) Date of publication of application:
**03.08.2022 Bulletin 2022/31**

(73) Proprietor: **Uniwersytet Warszawski
00-927 Warszawa (PL)**

(72) Inventors:
• **WASILEWSKI, Wojciech
02-130 Warszawa (PL)**
• **LIPKA, Michal
05-082 Stare Babice (PL)**
• **MAZELANIK, Mateusz
44-290 Jejkowice (PL)**

• **LESZCZYNSKI, Adam
09-400 Plock (PL)**
• **OSTASIUK, Andrzej
05-500 Piaseczno (PL)**
• **ZDANOWSKI, Krzysztof
08-106 Zbuczyn (PL)**
• **PARNIAK-NIEDOJADLO, Michal
03-976 Warszawa (PL)**

(74) Representative: **AOMB Polska Sp. z.o.o.
ul. Rondo Ignacego Daszynskiego 1
00-843 Warsaw (PL)**

(56) References cited:
**US-A1- 2013 048 846     US-A1- 2020 050 959**

- **MICHAL PARNIAK ET AL: "Quantum optics of spin waves through ac Stark modulation", ARXIV.ORG, CORNELL UNIVERSITY LIBRARY, 201 OLIN LIBRARY CORNELL UNIVERSITY ITHACA, NY 14853, 16 April 2018 (2018-04-16), XP081021170, DOI: 10.1103/PHYSREVLETT.122.063604**
- **BAO-SEN SHI ET AL: "Quantum storage of orbital angular momentum entanglement in cold atomic ensembles", JOURNAL OF PHYSICS B, ATOMIC MOLECULAR AND OPTICAL PHYSICS, INSTITUTE OF PHYSICS PUBLISHING, BRISTOL, GB, vol. 51, no. 3, 9 January 2018 (2018-01-09), page 32004, XP020324219, ISSN: 0953-4075, DOI: 10.1088/1361-6455/AA9B95 [retrieved on 2018-01-09]**
- **DANIELE COZZOLINO ET AL: "High-dimensional quantum communication: benefits, progress, and future challenges", ARXIV.ORG, CORNELL UNIVERSITY LIBRARY, 201 OLIN LIBRARY CORNELL UNIVERSITY ITHACA, NY 14853, 16 October 2019 (2019-10-16), XP081516381, DOI: 10.1002/QUTE.201900038**
- **NICOLAS SANGOUARD ET AL: "Quantum repeaters based on atomic ensembles and linear optics", ARXIV.ORG, CORNELL UNIVERSITY LIBRARY, 201 OLIN LIBRARY CORNELL UNIVERSITY ITHACA, NY 14853, 15 June 2009 (2009-06-15), XP080329333, DOI: 10.1103/REVMODPHYS.83.33**

**Description**

**Field of the Invention**

The subject of the invention is a system and a method for repeating a quantum signal. The system for repeating a quantum signal comprises an interferometer for generating entangled states of multiple angular modes. An integral element of the system for repeating a quantum signal are two Mach-Zehnder-type interferometers, configured together with a magneto-optical trap for generating entangled states of multiple angular modes. The quantum signal repeater comprises a Mach-Zehnder interferometer for generating maximally entangled states of multiple angular modes. This system allows the quantum memory to be converted into a quantum signal repeater/regenerator designed for Quantum Key Distribution QKD.

**State of the Art**

In the state of the art, the technology of Quantum Key Distribution (QKD) has been developing dynamically in recent years, which is gaining increasing popularity due to the possibility of secure communication and quantum encryption of transmitted messages. In QKD, two basic key distribution protocols are distinguished: (i) BB84 and (ii) E91:

(i) the BB84 protocol is a quantum key distribution protocol developed by Charles Bennett and Gilles Brassard in 1984 [Bennett, Charles H., Brassard, Gilles. Quantum Cryptography: Public key distribution and coin tossing. "Proceedings of the IEEE International Conference on Computers, Systems, and Signal Processing, Bangalore", 1984, p. 175]. The BB84 is historically the first proposed quantum cryptography protocol, the security of which has been demonstrated based on the fundamental laws of quantum mechanics, rather than on technical limitations (scarcity of computing power), as in the case of protocols for classical cryptography (e.g. see RSA). The aim of the BB84 protocol is to securely transmit to the receiver a random sequence of bits (cryptographic key) held by the sender, so that the information about it is not intercepted by third parties. In the BB84 protocol, a random sequence of $n$ bits held by the sender is mapped to states of $n$ qubits, physically realised as polarisation states of $n$ single photons or $n$ strongly attenuated laser pulses, which are then sent to the receiver via a free space or optical fibre channel. In this protocol, the number of transmitted bits is not greater than the number of transmitted photons. Conventionally, the sender sends vertically/horizontally or diagonally/antidiagonally polarised photons, wherein within each of these pairs a bit value of 1 is assigned to one of the polarisations and 0 to the other. The receiver, in turn, prepares its measuring system to receive one or the other pair of polarisations for each photon and, on the basis of the measurement results and additional public information received from the sender, reconstructs the key.

(ii) the Ekert protocol (E91 protocol) is based on the detection of polarisation-entangled photon pairs. In this protocol, a random sequence of bits (the key) is created on the basis of the measurement of the polarisation state of a photon pair, and therefore the role of the sender is redundant, and he takes on the role of a second receiver. Pairs of entangled photons are generated by a trusted source independent of the receivers. The photons generated as a pair are then spatially separated and directed, the first photon to the first receiver, and the second photon to the second receiver, respectively [Arthur K. Ekert "Quantum cryptography based on Bell's theorem" Phys. Rev. Lett. 67, 661, 1991]. The E91 protocol makes use of the properties of entangled photons pair. Polarisation entanglement causes that although the polarisation of each photon measured separately is completely random, within each pair it is perfectly correlated with the polarisation of the other photon in the pair. This implies that by using pairs of photons in the appropriate entangled state, it is possible to lead to a situation in which both receivers, when measuring the polarisation of their photons, will obtain the same measurement result with 100% probability. For appropriately chosen entangled states, the bit sequence generated based on the results, being held by both receivers, is completely random. In the E91 protocol, for each of $n$ photon pairs, no more than $n$ key bits are generated. In addition, in the E91 protocol, the presence of a possible eavesdropper is verified by performing Bell's inequality test, since any attempt to interfere with the signal modifies the quantum state of photons by weakening the correlations between them.

In both of the abovementioned quantum key distribution protocols (as well as in many other protocols that are further variations thereof), there are problems with the fading of quantum signals sent over significant distances. There are solutions known in the state of the art that allow quantum cryptographic key distribution with a low secret key rate. This rate decreases significantly as the optical signal loss in the free space or fibre channel used to transmit optical pulses increases. This limits the practical range of key distribution to about 100 km between sender and receiver for terrestrial fibre channels (Q. Zhang et al., "Large scale quantum key distribution: challenges and solutions", Opt. Express, 2018, 26, 24260-24273), and to about 1000 km in the case of key distribution using a satellite source of entangled photon pairs, located in Low-Earth Orbit (or the equally frequently used abbreviation LEO). An embodiment of quantum satellite communication that implements both the BB84 and E91 protocols is the Chinese satellite project MICIUS [S.-K. Liao et al., "Satellite-to-ground quantum key distribution" Nature, 2017, 549, 43-47].

Protocols for QKD quantum communication require the communicating parties to share a quantum entangled state with each other in order to establish the attention of the sender and receiver [in the literature, the sender (or transmitter) and receiver (or recipient) are often called Alice and Bob, according to the classic publication by Claude E. Shannon on information theory: C. E. Shannon, A mathematical theory of communication, Bell Syst. Tech. 27, 379 (1948)]. In optical communication systems, these are often states of light, e.g. polarisation thereof. An important feature of entangled states is that they need to be generated locally. For example, in the E91 protocol, for the simplest scenario, the source of entangled states is located halfway between the receivers. The source generates pairs of single photons in a polarisation-entangled state. One photon from the pair is sent to the first receiver and the other to the second receiver. Unfortunately, light is attenuated during transmission from the transmitter to the receiver. The quantity of photons delivered to receivers decreases exponentially with distance from the photon source. This allows quantum communication to be implemented in a simple scenario using existing telecommunications infrastructure over practical distances of the order of 100km. The quantum signal loss in a telecommunication channel is about 0.2 dB per 1 km, so that after 100 km about 1% of the originally transmitted signal remains. A signal amplifier known from classical optical communication cannot be used in quantum communication because of the so-called 'no-cloning theorem' which explains the fundamental inability to directly duplicate a quantum state without losing its properties.

A popular solution for sending a quantum key in QKD technology are quantum repeaters which play a role analogous to that of the classical signal amplifier, but at a quantum level. Quantum repeaters were already proposed in 1998 [Briegel, H.-J., Dür, W., Cirac, J. I. and Zoller, P. "Quantum Repeaters: The Role of Imperfect Local Operations in Quantum Communication", Physical Review Letters, 1998, 81(26), 5932-5935. https://doi.org/10.1103/PhysRev-Lett.81.5932], which was put into practice using atomic quantum memories in 2001 [Duan, L., Lukin, M., Cirac, J. et al. "Long-distance quantum communication with atomic ensembles and linear optics", Nature 2001, 414, 413-418], where quantum repeaters were implemented experimentally (currently in the literature, the quantum repeater protocol is referred to as DLCZ protocol), however, because of the losses introduced by the repeater itself, the practical application of simple repeaters still remains difficult. Even more modern quantum repeaters still remain imperfect for universal application thereof.

In the state of the art, there are also known multi-mode quantum memories based on a cloud of cold rubidium-87 atoms, wherein more than 600 angular modes of light are generated simultaneously [M. Parniak, et al., Nature Communications, 2017, 8, 2140, https://doi.org/10.1038/s41467-017-02366-7 and also B. M. Sparkes et al., New J. Phys. 2013, **15** 085027, https://doi.org/10.1088/1367-2630/15/8/085027], and other magneto-optical traps for neutral atoms [US8835833B2 equivalent to US2013048846A1].

From an European patent document from 2009, the architecture of a quantum repeater system is known [EP2909955B1]. In the presented quantum repeater system, the phenomenon of entanglement of a photon pair is used, which is transferred to further trusted nodes of optical communication, where the entanglement is transferred to further nodes. Applications of the present architecture include quantum key distribution (QKD) and quantum computing. In the state of the art, similar quantum repeaters based on DLCZ protocol having a similar architecture are known [Jian-Wei Pan et al., Phys. Rev. Lett., 2007, 98, 240502].

In the state of the art, the QKD quantum key transmission device [EP2529503B1, document from 2011] is also known, which includes a GPS receiver module for recording the GPS signal and a processor that operates to use the GPS signal to synchronise the clock signal with the QKD quantum signal transmission.

From the international PCT patent application [WO2017197235A2] and the US patent document [US20180254085A1], the use of a quantum memory made of a solid-state material for repeating a quantum signal is known, which includes a solid-state material doped with rare earth elements (in particular yttrium, zirconium or erbium), polycrystalline ceramic optical device, a magnetic field generating unit and one or more lasers for optical pumping.

In the state of the art, a quantum repeater and a method for creating end-to-end entanglement [WO2011000444A1] between the first and second nodes of connected quantum repeater nodes are known.

In the state of the art, a review literature on the issue of generating quantum signals over long distances is known, for example: [N. Sangouard, C. Simon, H. de Riedmatten, and N. Gisin, "Quantum repeaters based on atomic ensembles and linear optics" Rev. Mod. Phys., 2011, 83, 33 - 80].

In the state of the art, a combination of a Mach-Zehnder interferometer with a non-linear optical crystal (abbreviated PPKTP) with a periodic inversion of non-linear domains is known ["Experimental conversion of position correlation into polarization entanglement" C. Perumangatt, A. Lohrmann and A. Ling, made available on 29/10/2019, arXiv:1910.13149].

The set of linear quantum operations, important for many fundamental studies in photonic systems, to the material domain of collective excitations known as spin waves are described in MICHAL PARNIAK ET AL: "Quantum optics of spin waves through ac Stark modulation", ARXIV.ORG, CORNELL UNIVERSITY LIBRARY, 201 OLIN LIBRARY CORNELL UNIVERSITY ITHACA, NY 14853, 16 April 2018 (2018-04-16), XP081021 170 . Using the ac Stark effect they realize quantum operations on single excitations and demonstrate a spin-wave analogue of the Hong-Ou-Mandel effect, realized via a beam splitter implemented in the spin-wave domain. Their scheme equips atomic-ensemble-based quantum repeaters with quantum information processing capability and can be readily brought to other physical systems, such as doped crystals or room-temperature atomic ensembles.

In the article BAO-SEN SHI ET AL: "Quantum storage of orbital angular momentum entanglement in cold atomic ensembles", JOURNAL OF PHYSICS B, ATOMIC MOLECULAR AND OPTICAL PHYSICS, INSTITUTE OF PHYSICS PUBLISHING, BRISTOL, GB, vol. 51, no. 3, 9 January 2018 (2018-01-09), page 32004, XP020324219, ISSN: 0953-4075, presents that electromagnetic waves have both spin momentum and orbital angular momentum (OAM). Light carrying OAM has broad applications in micro-particle manipulation, high-precision optical metrology, and potential high-capacity optical communications. In the concept of quantum information, a photon encoded with information in its OAM degree of freedom enables quantum networks to carry much more information and increase their channel capacity greatly compared with those of current technology because of the inherent infinite dimensions for OAM. Quantum memories are indispensable to construct quantum networks. Storing OAM states has attracted considerable attention recently, and many important advances in this direction have been achieved during the past few years. Here we review recent experimental realizations of quantum memories using OAM states, including OAM qubits and qutrits at true single photon level, OAM states entangled in a two-dimensional or a high-dimensional space, hyperentanglement and hybrid entanglement consisting of OAM and other degree of freedom in a physical system. We believe that all achievements described here are very helpful to study quantum information encoded in a high-dimensional space.

DANIELE COZZOLINO ET AL: "High-dimensional quantum communication: benefits, progress, and future challenges", ARXIV.ORG, CORNELL UNIVERSITY LIBRARY, 201 OLIN LIBRARY CORNELL UNIVERSITY ITHACA, NY 14853, 16 October 201 9 (2019-10-16), XP081516381, describes that in recent years, there has been a rising interest in high-dimensional quantum states and their impact on quantum communication. Indeed, the availability of an enlarged Hilbert space offers multiple advantages, from larger information capacity and increased noise resilience, to novel fundamental research possibilities in quantum physics. Multiple photonic degrees of freedom have been explored to generate high-dimensional quantum states, both with bulk optics and integrated photonics. Furthermore, these quantum states have been propagated through various channels, e.g. free-space links, single-mode, multicore, and multimode fibers and also aquatic channels, experimentally demonstrating the theoretical advantages over two-dimensional systems. Here, we review the state of the art on the generation, the propagation and the detection of high-dimensional quantum states.

The article NICOLAS SANGOUARD ET AL: "Quantum repeaters based on atomic ensembles and linear optics", ARXIV.ORG, CORNELL UNIVERSITY LIBRARY, 201 OLIN LIBRARY CORNELL" presented that the distribution of quantum states over long distances is limited by photon loss. Straightforward amplification as in classical telecommunications is not an option in quantum communication because of the no-cloning theorem. This problem could be overcome by implementing quantum repeater protocols, which create long-distance entanglement from shorter-distance entanglement via entanglement swapping. Such protocols require the capacity to create entanglement in a heralded fashion, to store it in quantum memories, and to swap it. One attractive general strategy for realizing quantum repeaters is based on the use of atomic ensembles as quantum memories, in combination with linear optical techniques and photon counting to perform all required operations. Here the theoretical and experimental status quo of this very active field are reviewed. The potentials of different approaches are compared quantitatively, with a focus on the most immediate goal of outperforming the direct transmission of photons "

In the state of the art (US2020/050959), a quantum computing system includes an input port for receiving a data stream comprising a plurality of bits is disclosed. Orbital angular momentum processing circuitry receives the data stream and applies at least one of a plurality of orbital angular momentum function modes to each of the plurality of bits of the data stream. Each of the plurality of orbital angular momentum function modes comprises separate orbital angular momentum states that are orthogonal to each other. DLP processing circuitry associated with the orbital angular momentum processing circuitry generates a hologram for applying the at least one of the plurality of orbital angular momentum function modes to each of the plurality of bits of the data stream. At least one quantum gate receives each of the of the plurality of bits of the data stream having at least one of the plurality of orbital angular momentum functions applied thereto via at least one gate input and generates a quantum circuit output via at least one gate output responsive thereto. An output port outputs the generated quantum circuit output.

## State of the art problem

A major problem in the state of the art is to transmit the quantum key over long distances while maintaining a high frequency of quantum key transmission. Another technical problem in systems known in the art is the ability to simultaneously share (i.e. multiplex), transmit and repeat a quantum signal of multiple angular modes of light using a single quantum repeater. Quantum state repeaters are necessary to establish quantum communications over distances of several hundred kilometres and require entangled states generators with memory. A generator with memory is such a generator where photon A (specifically a photon with H or V polarisation) of entangled state is produced earlier, and photon B later (with H or V polarisation, orthogonal to photon A) and photon B is generated after the signal delivered to the quantum memory.

In the state of the art, only probabilistic generators with memory are known, i.e. per every thousand activations of the generator both particles are emitted by it on average ten times. As a result, out of many attempts to establish communication, only a few are successful.

**Solution to the problem**

Unexpectedly, the invention described in the present patent application solves several technical problems simultaneously. The invention makes it possible to transmit quantum key qubits over longer distances (about 150 km), compared to existing state-of-the-art solutions (about 100 km), while maintaining an increased transmission frequency of key ebits. Furthermore, at the same time, the invention allows multiplexing of quantum optical signals, so that more optical signals are sent in one transmission channel.

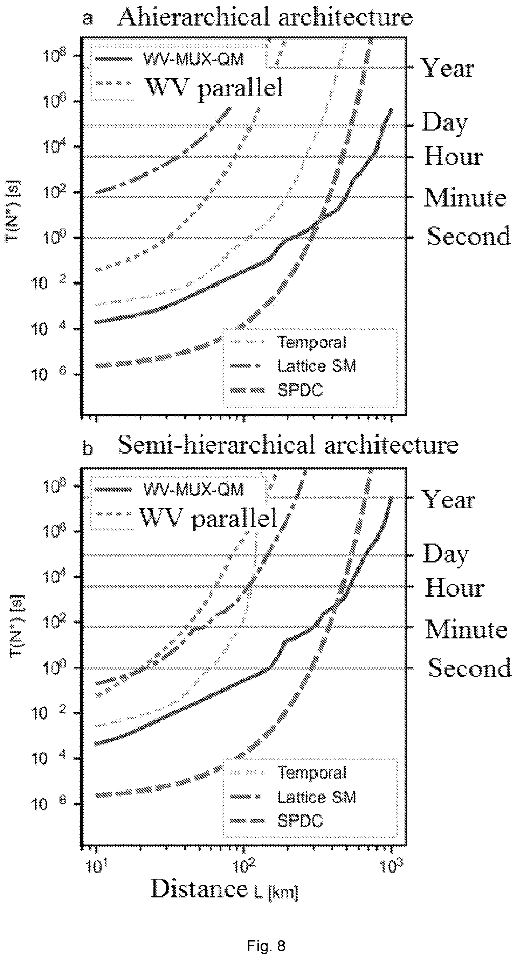

The advantage of the invention is realized in the transmission of optical signals beyond about 300 km and increases with the distance, for example, for 550 km it allows the reproduction of 1 ebit per 6 minutes, where for solutions known from the state of the art, 1 ebit per 2 days is achieved - for exact comparative data, see Fig. 8. At the same time, the invention allows multiple angular modes of light emission from the MOT quantum memory to be used as separate or multiplexed quantum optical signals.

The generator according to the invention is equivalent to M=500 generators known in the state of the art, that is, it has 500 output channels referred to as modes for the photon (photons or particles) A and the same number for the particles B, the channels being paired. The effect of parallelism is achieved through the non-obvious use of multiple directions in which a photon can be emitted and the small expansion of the system compared to the state of the art. The disclosed solution is much simpler than 500 generators from the state of the art. Per each activation of the generator, an average of 5 pairs of entangled photons will be generated. Although it is not known in advance in which channels the emission of A photons will occur, once they have been recorded and it has been determined which channels have worked, it is known that the same channels will work for B photons.

**Disclosure of the invention**

A system for generating polarisation-entangled photon pairs for repeating a quantum signal over a distance, comprising a multi-mode quantum memory which comprises a magneto-optical trap (MOT) equipped with magnetic coils for trapping atoms, cooling lasers, additional pumping lasers, as well as a Write (W) laser and a Read (R) laser, wherein the quantum memory is optically coupled to two Mach-Zehnder interferometers (MZI) aligned in one axis on both sides of the quantum memory, and between the quantum memory and each of the Mach-Zehnder interferometers (MZI) 1) there is an objective, at least one filter and wave plates, according to the invention, is characterised in that the magneto-optical trap (MOT) is configured to produce a gas of laser-cooled atoms, illuminated by laser light, which, during illumination, generates and emits pairwise entangled photons (A and B) in at least 10 different directions, preferably 1000 directions, in the optical path of each direction of the photons (A and B) there is an objective the angular aperture of which is between 1° and 10°, preferably 5°, which is located between the magneto-optical trap (MOT) and the Mach-Zehnder interferometer (MZI) 2), while the Mach-Zehnder interferometers (MZI) 3) are aligned relative to each other and configured to pair channels in optical paths whereby always half of the channels is H-polarised and the other half is V-polarised.

Preferably, in the optical path of single photons A and B, there are interference and/or absorption filters for stopping the light beam of lasers W and R, respectively, and letting through photons A and B, and preferably these filters include consecutive: an interference filter and an atomic absorption filter.

Preferably, the Write W and Read R lasers are directed towards the magneto-optical trap (MOT) opposite each other and are configured to emit beams uniformly illuminating the cloud of cold atoms at an angle of 1-10°, more preferably 1-5°, with respect to the axis of the system, so that it is possible to stop most of the laser light with an aperture in the focal plane of the objective.

Preferably, the quantum memory is equipped with two Mach-Zehnder interferometers (MZI) for converting 2M memory channels into M memory channels by generating polarisation-entangled states of the emitted photons.

Preferably, between the Mach-Zehnder interferometer (MZI) and the magneto-optical trap (MOT), in the optical path, there is, furthermore, a half-wave plate (HWP) and/or an additional quarter-wave plate (QWP), configured to convert the polarisation of the photons emitted from the memory to horizontal or vertical polarisation.

Preferably, in one of the arms of the Mach-Zehnder interferometer (MZI), an additional half-wave plate (HWP) is provided, configured to combine photons from both arms on a polarising beamsplitter (PBS) cube, so that these photons come out of this beamsplitter cube together in one direction.

Preferably, in both of the Mach-Zehnder interferometers (MZI) there are precision screws for adjusting the position and inclination of the mirrors (7).

Preferably, the multi-mode quantum memory comprises, in the magneto-optical trap (MOT), optically cooled alkali metal atoms (IUPAC Group 1), in a gas form, in particular as mixtures of naturally occurring isotopes or in the form of pure isotopes of the following elements: lithium, especially $^6$Li or $^7$Li, sodium, especially $^{23}$Na, potassium, especially $^{39}$K or $^{41}$K, rubidium, especially $^{85}$Rb or $^{87}$Rb, caesium, especially $^{133}$Cs.

Preferably, the beam of laser W is clockwise circularly polarised and red-detuned from the F=1 → F'=2 transition on the D2 rubidium-87 line by 20-30 MHz, i.e. in the frequency domain of 384230484 MHz + 4272 MHz - 73 MHz ± 30 MHz.

Preferably, the beam of laser R is counterclockwise circularly polarised in resonance with the F=2 → F'=2 transition on the D1 rubidium-87 line, i.e. in the frequency domain of 377107463 MHz - 2563 MHz + 306 MHz ± 10MHz.

Preferably, the system comprises at least one quadrupole coil capable of generating a gradient of at least 10 gauss/cm in the x and y directions and at least 1 gauss/cm in the z direction.

Preferably, the transverse dimension of the cold cloud of atoms is more than 0.2x0.2 mm, preferably 0.5x0.5 mm, and the longitudinal dimension of this cloud is more than 5 mm, preferably 10 mm.

A method for generating entangled photon pairs in a multi-mode quantum memory for repeating a quantum signal over a distance, implemented in the system described above, according to the invention is characterised in that it includes the following steps:

a) alkali metal atoms (IUPAC Group 1), in a gas form, in particular as mixtures of naturally occurring isotopes or in the form of pure isotopes of the following elements: lithium, especially $^6$Li or $^7$Li, sodium, especially $^{23}$Na, potassium, especially $^{39}$K or $^{41}$K, rubidium, especially $^{85}$Rb or $^{87}$Rb, caesium, especially $^{133}$Cs, preferably rubidium-87 atoms, are trapped in a magneto-optical trap (MOT), especially using the magnetic field of a quadrupole coil and cooling laser beams;

b) atoms are optically pumped with a laser beam to chosen state, preferably in rubidium-87 to the state $5S_{1/2}$, F = 1, $m_F$ = -1;

c) photons A are generated by means of a pulse from laser W, the Write laser generates excitations with a wavelength in the range of 775-785 nm, preferably 780 nm, these pulses last 50-500 ns, preferably 100-300 ns, and photons A pass through a Mach-Zehnder interferometer (MZI);

d) the arrival of a read-out request is awaited for;

e) photons B are read by means of a pulse from laser R which emits a laser beam with a wavelength in the range of 790-800 nm, preferably 795 nm, the pulses last preferably 50-500 ns, most preferably 100-300 ns, and photons B pass through a Mach-Zehnder interferometer (MZI), wherein in the magneto-optical trap (MOT) a gas of laser-cooled atoms is produced, illuminated by laser light, which, when illuminated, generates and emits pairwise entangled photons (A and B) in at least 10 different directions, preferably 1000 directions, with an adjustable delay of more than 50 nanoseconds, preferably in the range of 50-100 microseconds, and by means of Mach-Zehnder interferometers (MZI) 2M optical channels are pairwise combined into M optical channels, wherein always one channel of the pair is H-polarised and the other channel is V-polarised, so that a multi-mode polarisation-entangled state is generated.

Preferably, the angle-multiplexed multi-mode quantum memory emits photons in different directions/modes, wherein a first photon is emitted in a random direction and then a second photon is emitted in a closely correlated direction, preferably opposite to the first photon, and in the period between the first photon and the second photon, the information about the direction of emission is encoded as a quantum signal in the form of a wavevector of a spin wave in an ensemble of cold atoms.

Preferably, the quantum memory emits photons scattered in the direction of channels (A) and (B), respectively, when illuminating the cloud of cold atoms with pulses of the Write (W) and Read (R) lasers due to Raman scattering.

Preferably, the emission of the scattered delayed photons in directions A and B, respectively, is parallel and of opposite vectors.

Preferably, the quantum memory generates at least 500, not more than 100 000 memory channels, preferably the memory generates between 1000 and 2000 memory channels.

Preferably, photon A is emitted into channel A and the frequency of photon A is shifted by-6834 MHz relative to laser W and photon A is counterclockwise polarised.

Preferably, the frequency of photon B is shifted by + 6834 MHz relative to laser R and photon B is clockwise polarised.

Preferably, laser W during write-out emits a pulse having a duration of 100-1000 ns, preferably 100-300 ns, while laser R during read-out emits a pulse having a duration of 100-1000 ns, preferably 100-300 ns.

Preferably, the quadrupole coil is switched on during atom trapping and then is switched off.

Preferably, the atom trapping step further includes an operation in which:
a1) the magneto-optical trap (MOT) is loaded, whereby the following devices are switched on for a maximum period of 2 ms, preferably for a maximum of 1 ms: a cooling laser, a repumping laser and a quadrupole coil.

Preferably, the atom trapping step further includes an operation in which:
a2) a cloud of cold atoms is densified, whereby the intensity of the cooling laser is linearly reduced to about 30% of the maximum intensity (of max. 4 mW/cm$^2$), which is done with the quadrupole coil switched on and the repumping laser switched on, this step lasting 600-800 microseconds, preferably 700 microseconds.

Preferably, the atom trapping step further includes an operation in which:
a3) a cloud of cold atoms is cooled, at which time the quadrupole coil is switched off and the cooling laser is red-detuned by an additional 10 MHz, this step lasting 200-400 microseconds, preferably 300 microseconds.

Preferably, the rotation angles of the wave plates before and inside the Mach-Zehnder interferometers (MZI) are additionally adjusted so as to direct all photons to the same PBS output port inside the Mach-Zehnder interferometer MZI.

Preferably, the positions of the Mach-Zehnder interferometer MZI mirrors are additionally adjusted, wherein 2M quantum memory output channels are selected and paired, a smaller number of channels with longer memory lifetimes is selected or a larger number of channels with shorter memory lifetimes is selected.

Preferably, the angles of the Mach-Zehnder interferometer MZI mirrors are additionally adjusted so as to achieve exact parallelism of all mirrors.

## Advantages of the invention

The invention according to the patent specification allows for efficient generation and distribution of polarisation-entangled quantum states of light using known multi-mode angular quantum memories and multi-mode single photon detection systems. The invention allows for the parallel operation of known protocols for the generation and distribution of entangled states of light, as well as for the use of multiplexing between individual quantum memory modes, which results in a further increase in efficiency compared to the parallel operation of known solutions.

The use of the invention disclosed in the present specification allows for further advantages. Thanks to this property of the invention, it is possible to set up a path from the generator on the B-side to further elements of the programmable demultiplexer, which will redirect the particles to always the same end channels B2. Thus, when using the invention for repeating a quantum state, it will be possible to establish communication much more frequently, and the acceleration may reach a limit value of M.

Taking that into account, one can easily use the invention without an active multiplexer to obtain an M-fold acceleration of the entanglement transmission. Nevertheless, the use of an additional active multiplexer that can be set up, which redirects particles to always the same end channels, allows multiplexing to be used between memory modes. Thus, it is possible to obtain an additional acceleration by the factor M, or M$^2$ in total. A protocol allowing such a gain is described in [New J. Phys. 23 053012 (2021)] (https://iopscience.iop.org/article/10.1088/1367-2630/abfl9a).

For the implementation of the invention it is possible to use alkali metals (i.e. group 1 of the periodic table), in the form of gas in a magneto-optical trap (MOT), including, among others, elements in the form of mixtures of naturally occurring isotopes, or in the form of pure isotopes: lithium ($^6$Li and $^7$Li), sodium ($^{23}$Na), potassium ($^{39}$K and $^{41}$K), rubidium ($^{85}$Rb and $^{87}$Rb), caesium ($^{133}$Cs).

A possible disadvantage of the solution may be the need to use multi-mode detection of single photons at the entanglement generation step, which in the current state of technology and knowledge is characterised by low efficiency. Another disadvantage of the solution may be the need to transmit many (from several hundred to several thousand) angular modes of light between the nodes of quantum repeaters and the intermediate stations responsible for the generation of entanglement. Another possible disadvantage is the need for high-speed processing of multi-mode light detection data at an intermediate station to make information about the modes in which entanglement was generated available for multiplexing. Another possible disadvantage of the solution is the need for precise calibration of the Mach-Zehnder interferometer (MZI) to obtain a spatially homogeneous optical phase between the write-out photons in horizontal and vertical polarisation.

## Preferred embodiment of the invention

Now, the invention will be presented in a preferred embodiment, with reference to the accompanying drawing in which:

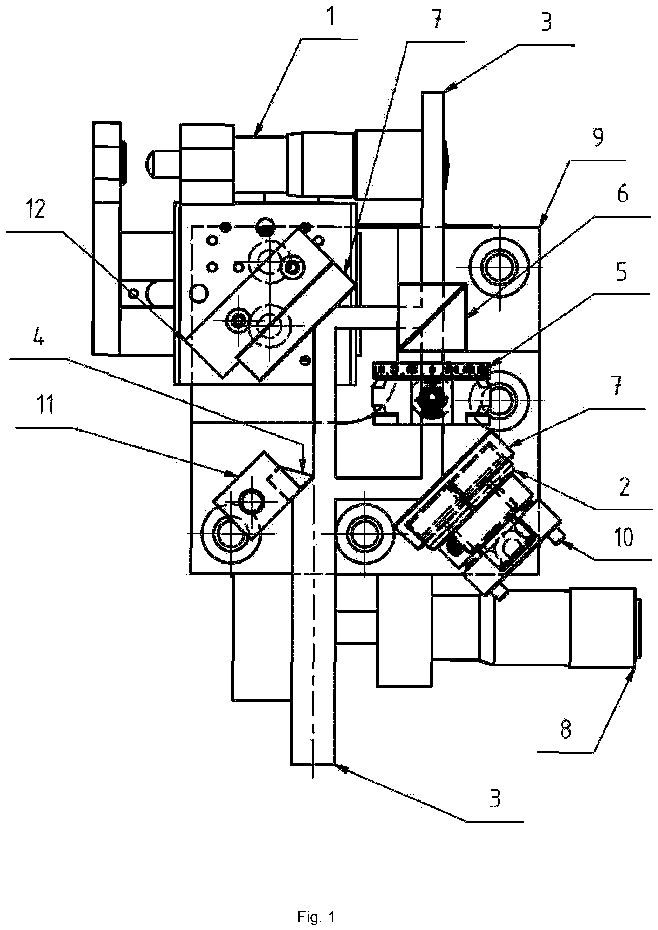

Fig. 1    shows the actual configuration of the Mach-Zehnder Interferometer (MZI), in the main view, applied to the quantum signal repeater system;

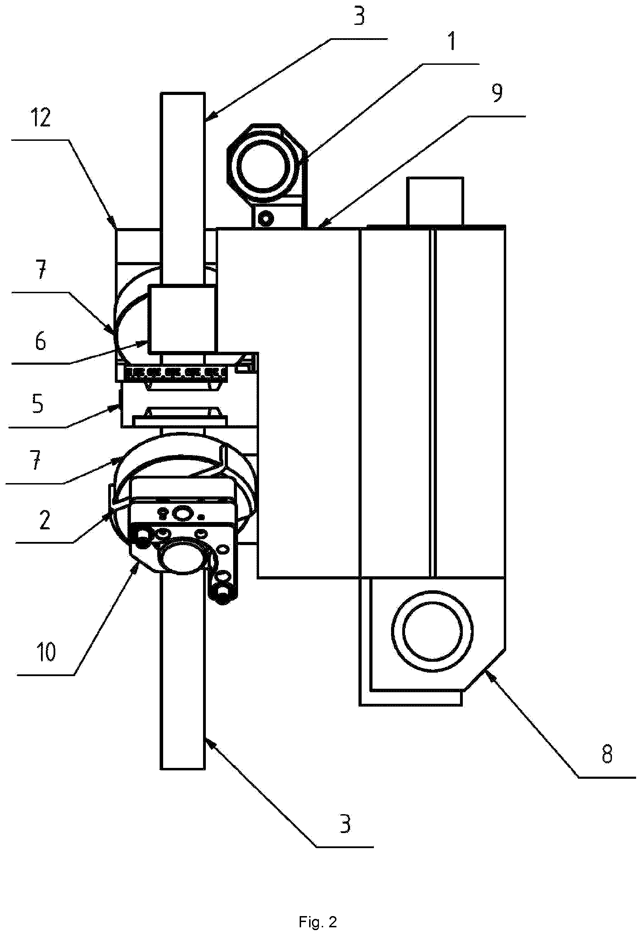

Fig. 2    shows a schematic view of the Mach-Zehnder interferometer (MZI) in the side view;

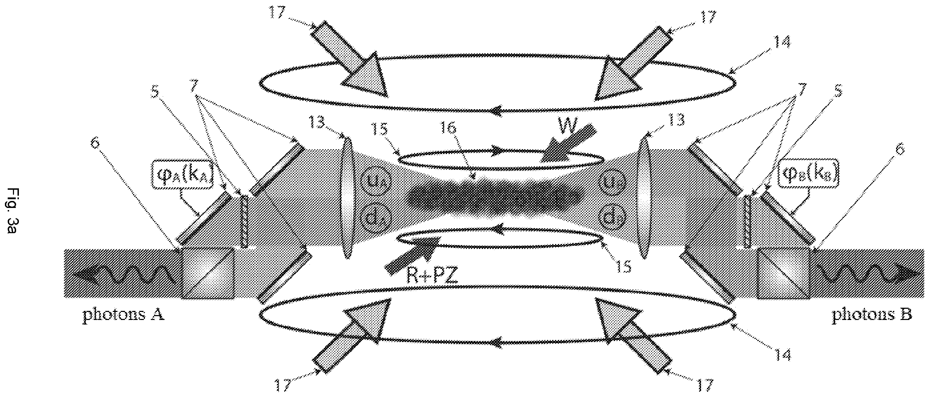

Fig. 3a    shows a system for generating entangled states in a single ensemble of rubidium atoms ($^{87}$Rb) which is part of the quantum signal repeater. The system shows an ensemble of rubidium atoms serving as a wavevector multiplexed multi-mode quantum memory, the individual spatial modes of which (called here memory channels) correspond to different emission angles of write-out (and read-out) photons. In the write-out path (laser W scatters photons A via the optical pathway in the left direction in Fig.), the light modes are divided in the far field into two spatially separated groups of photon channels, polarised horizontally (channel H or $u_a/u_b$) and vertically (channel V or $d_a/d_b$), respectively. In the Mach-Zehnder interferometer (MZI), two groups of light mode channels are superimposed, thereby creating a polarisation-entangled state at different emission angles. Analogously, a second MZI is placed in the memory read-out path (laser R scatters photons B via optical path in the right direction in Fig.).

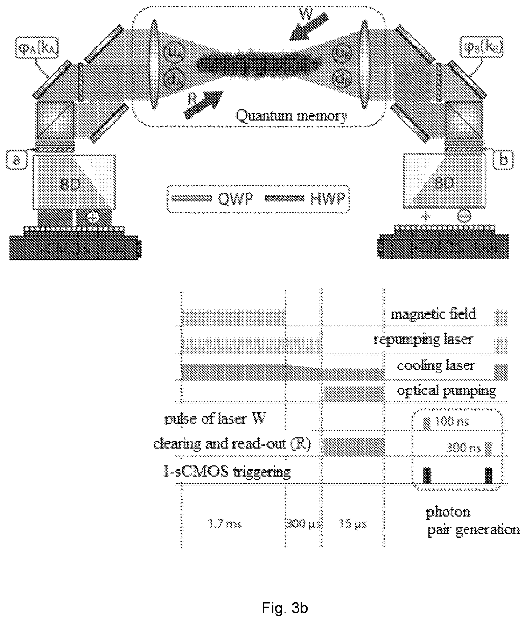

Fig. 3b    shows an experimental system for verification of fidelity of entangled states generated in a single ensemble of rubidium atoms ($^{87}$Rb) which is part of the quantum signal repeater. There is shown an ensemble of rubidium atoms which serves as a wavevector multiplexed multi-mode quantum memory, the individual modes of which correspond to different emission angles of write-out (and read-out) photons. In the write-out path, light modes are divided in the far field into two spatially separated groups of photon channels, with assigned horizontal (H) and vertical (V) polarisation, respectively. In the Mach-Zehnder interferometer (MZI), two groups of light mode channels are superimposed, thereby creating a polarisation-entangled state at different emission angles (memory modes). Analogously, in the memory read-out path, a second MZI is placed. On the left side of the memory (in the path of the write-out photons), after the MZI, there is a system for projective measurement of the polarisation of single photons with spatial resolution (thanks to the I-sCMOS camera). An analogous system is also located in the memory read-out arm (on the right of the memory). Spatial resolution allows the emission angle of write-out and read-out photons to be determined. Together, the two detection systems enable multi-mode Bell state measurement (BSM) between the write-out and read-out photon. The lower part of the Fig. shows the temporal experimental sequence including the lasers and the magnetic field responsible for cooling the ensemble of atoms and the quantum memory and detection systems.

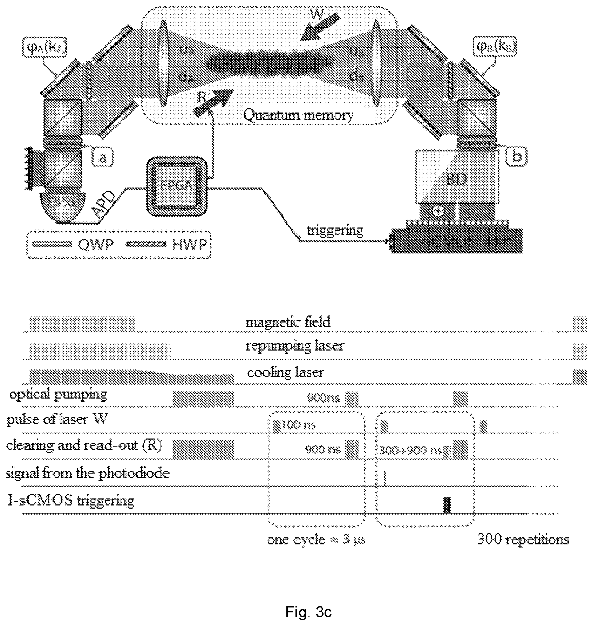

Fig. 3c    shows an experimental system for verification of fidelity of entangled states generated in a single ensemble of rubidium atoms ($^{87}$Rb) which is part of the quantum signal repeater. There is shown an ensemble of rubidium atoms which serves as a wavevector-multiplexed multi-mode quantum memory, the individual modes of which correspond to different emission angles of write-out (and read-out) photons. In the write-out path, light modes are divided in the far field into two spatially separated groups of photon channels, with assigned horizontal (H) and vertical (W) polarisation, respectively. In the Mach-Zehnder interferometer (MZI), two groups of light mode channels are superimposed, thereby creating a polarisation-entangled state at different emission angles (memory modes). Analogously, in the memory read-out path, a second MZI is placed. On the left side of the memory (in the path of the write-out photons), after the MZI, there is a system for projective measurement of the polarisation of single photons without spatial resolution. Detection of a photon results in the triggering of an analogous system in the memory read-out arm (on the right side of the memory), which however has the spatial resolution (thanks to the I-sCMOS camera) allowing the emission angle of the read-out photon to be determined. Together, the two detection systems enable multi-mode Bell state measurement (BSM) between the written and read photon. The lower part of the Fig. shows the temporal experimental sequence including the lasers and the magnetic field responsible for cooling the ensemble of atoms and the quantum memory and detection systems.

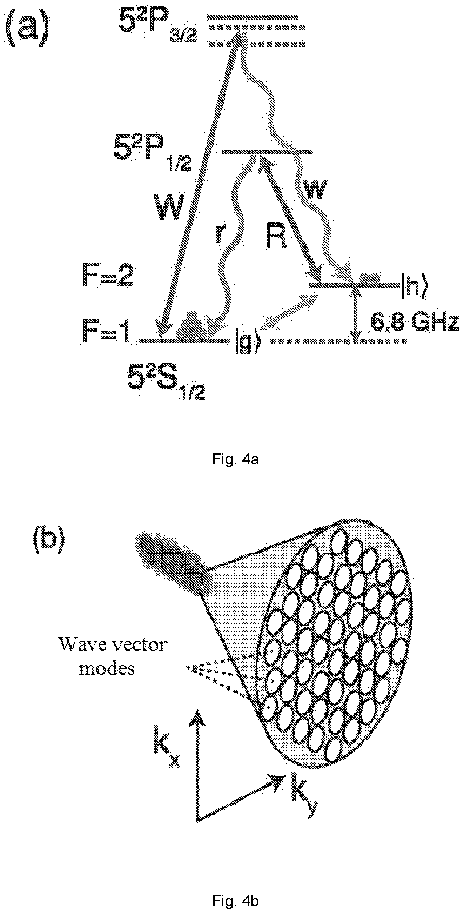

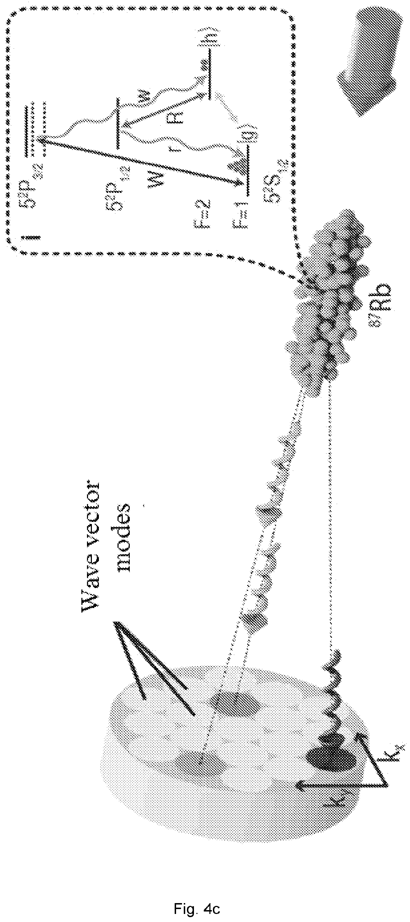

Fig. 4    shows, in part (a), the atomic energy levels in the lambda configuration for light-atom interactions in a wavevector-multiplexed quantum atomic memory based on cold rubidium-87 ($^{87}$Rb) atoms. Designations: W- write beam, R - read beam, w - write-out photon, r - read-out photon. In part (b), in case of multiplexing with a wavevector, each atomic memory mode corresponds to a different emission angle (or wavevector) of the photons being written (and read). In part (c), both previous figures in a different view.

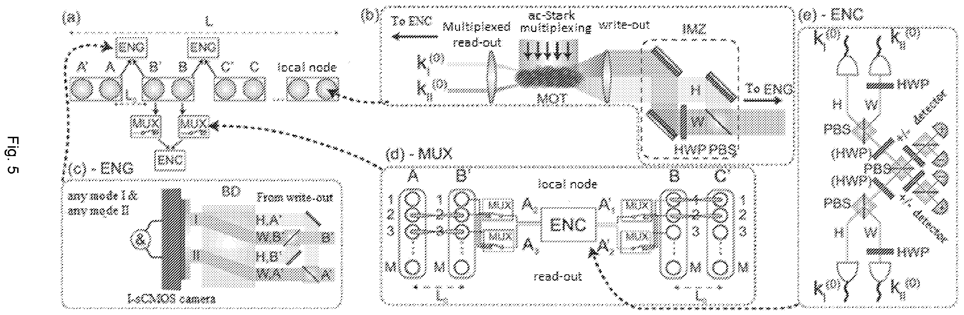

Fig. 5    shows the overall system for repeating a quantum signal in a schematic view. In part (a), transmission of entanglement in an ahierarchical architecture of quantum repeaters, using wavevector-multiplexed quantum memories (WV-MUX-QM). Each node consists of two WV-MUX-QMs (e.g. A', A). Intermediate nodes are located at a distance of $L_0$ from each other. Each of them sends write-out photons, generated in one of its ensembles of atoms, to an intermediate station in order to generate entanglement (ENG) between distant ensembles of atoms (e.g. A and B').

In part (b),    it shows an wavevector-multiplexed multi-mode quantum memory (WV-MUX-QM), comprising an ensemble of atoms together with a light-matter interface based on spontaneous Raman scattering that generates pairs of write-out photons and a collective atomic excitation - a spin wave. In the far field of the ensemble of atoms, the angular modes of the write-out photons are divided into two channels with adjustable horizontal (H) or vertical (V) polarisation, and then these channels are spatially superimposed.

| | |
|---|---|
| In part (c), | it shows an entanglement generation (ENG) process between two remote WV-MUX-QMs, A' and B, which involves multi-mode transmission of write-out photons to an intermediate station. Due to spatially separated detection of single photons (single photon sensitive camera), any of the M modes from A' can be entangled with any of the M modes from B, thereby providing $M^2$ possibilities and facilitating quasi-deterministic ENG even with significant losses. ENG is heralded by detecting coincidence between recorded photons in particular detection regions. |
| In part (d), | a method of multiplexing is shown - for quantum entanglement of ensembles A and C' at the entanglement connection (ENC) step after a successful ENG between A&B' and B&C', photons read from B and B' are multiplexed into preselected modes using a reconfigurable multiplexer (MUX) and using information about which modes the entanglement generation (ENG) occurred in. |
| In part (e) | there is shown the entanglement connection (ENC) step that takes place at a local node. The memories are read and photons from the quantum memories are multiplexed into pre-selected optical modes. When coincidence between different +/- detectors is detected, the optical system projects the spin wave state of ensembles A and C' onto a maximally entangled Bell state. |
| Fig. 6 | shows in part (a) the Fourier spectrum of the spatial ac-Stark modulation of the atomic state, consisting of two central frequencies selected to move spin waves in wavevector space to pre-selected modes. In part (b), on the other hand, an example representation of the transformation of the wavevectors of the spin wave states using ac-Stark modulation to multiplex the read-out of the spin wave states into pre-selected photonic modes. In part (c), an alternative multiplexing is shown, based on external acousto-optic deflectors (AOD) which change the photonic (angular) mode of the read photons. |
| Fig. 7 | shows in part (a) an angle-multiplexed multi-mode quantum memory (WV-MUX-QM), comprising an ensemble of atoms together with a light-matter interface based on spontaneous Raman scattering that generates pairs of write-out photons and a collective atomic excitation - a spin wave. In the far field of the ensemble of atoms, the angular modes of the write-out photons are divided into two channels with adjustable horizontal (H) or vertical (V) polarisation, and then these channels are spatially superimposed. An entanglement generation (ENG) between two remote WV-MUX-QMs - A and B' involves multi-mode transmission of write-out photons to an intermediate station. Due to spatially-resolved detection of single photons (using a single photon sensitive camera), any of the M modes from A can be entangled with any of the M modes from B', thereby providing $M^2$ possibilities and facilitating quasi-deterministic ENG even with significant losses. ENG is heralded by detecting coincidence between recorded photons in particular detection regions. In part (b), in turn, there is shown the entanglement connection (ENC) step, that takes place at a local node. Photons are read from the memory and then multiplexed into pre-selected optical modes. When coincidence between different (+/-) detectors is detected, the optical system projects the spin wave state of ensembles A and C' onto a maximally entangled Bell state. |
| Fig. 8 | shows the dependence of the average time to transmit one e-bit, which actually corresponds to a certain fraction of the key bits, e.g. with ideal detectors and standard BB84 protocol it is 0.5 key bit, between a sender and a receiver separated by a distance L. There is shown a comparison of times for the central source of entangled states based on spontaneous parametric frequency division (SPDC) for quantum repeaters in: (a) ahierarchical and (b) semi-hierarchical architectures. For quantum repeaters, experimentally feasible physical platforms were compared, i.e., an wavevector-multiplexed multi-mode quantum memory (WV-MUX-QM), wavevector-multi-mode quantum memory without multiplexing (WV parallel), multi-mode temporal quantum memory based on rare-earth doped crystals, single-mode atomic memory in an optical lattice (Lattice SM). The number of quantum repeater stations between end users has been optimised to maximise the ratio of e-bit transmission frequency to the number of stations. |
| Fig. 9 | Dependence of the decoherence rate $\tau(k)$ on the wavevector length of the spin wave $k$. The data were obtained by selecting wave vectors for which the decoherence for both polarisations is the same, from maps of dependence of visibility of the Bell state measurement $V(t)$ on time $t$ and length of the wave vector $k$. The data were binned according to the wavevector modulus, and the decoherence model given by the equation $V(t) = V_0/(1 + W/V_0 \, exp \, [t^2/\tau(\mathbf{k})^2])$ was fitted taking into account all bins simultaneously. The fitting parameters were coefficients $V_O$, $W$, $\tau(k)$. The resulting decoherence rate is shown with a solid line (Data). The shaded region corresponds to one standard deviation. The dashed line shows another model (Fitting) fitted to the data obtained and described by equation $\tau(k) = \gamma/k$. The fitting corresponds to the coefficient $\gamma = 5{,}98 \times 10^3 \, \mu s \, mm/rad$, which is reflected in the temperature of atomic ensemble of 51.7 $\mu$K. |

In the drawing, the following designations were used as defined in the dictionary, disclosed in the following order: 1 - translation stage; 2 - mirror holder. The holder allows the mirror to be held in the kinematic mount (i.e. element 10); 3 - schematic representation of the laser beam; 4 - D-Shape. Mirror with a sharp D-shaped edge; 5 - wave plate in a rotating holder, (the holder, i.e. so-called "rotation mount"); 6 - PBS - polarising beamsplitter cube; 7-Mirror; 8 - translation stage; 9 - device base made of metal, preferably of aluminium, 10 - small kinematic mount; 11 - D-Shape holder, element made of metal, preferably of aluminium; 12-mirror holder made of metal, preferably of aluminium; 13 - lens or objective; 14 - 3 pairs of large earth coils compensating the Earth's magnetic field; 15 - one quadrupole coil [US8835833B2]; 16 - cloud of cold rubidium atoms; 17 - lasers - cooling and repumping the cloud of rubidium atoms; W- laser beam illuminating the cloud of atoms at a small angle to the optical axis, beam of laser W - write-out (generating excitations), with a wavelength of 780 nm; R - Read laser pulses, beam with a wavelength of 795 nm; PZ - Zeeman pump

> MUX - multiplexed (switched, redirected);
> BSM - Bell state measurement;
> BD - beam displacer;
> ENC - entanglement connection;
> ENG - entanglement generation;
> I-sCMOS - intensified scientific Complementary Metal-Oxide-Semiconductor camera;
> MZI - Mach-Zehnder interferometer;
> MOT - Magneto-Optical Trap;
> HWP - half-wave plate;
> QWP - quarter-wave plate;
> PBS - polarising beamsplitter;
> AOD - acoustic-optical deflector;
> H - horizontally;
> V - vertically;
> WV-MUX-QM - angle-multiplexed multi-mode quantum memory;

**Glossary and definitions of terms used in the specification**

In the present specification, the terms used have the following meanings. Undefined terms in the present specification have the meanings given and understood by a person skilled in the art in light of the best knowledge available, this disclosure and the context of the patent specification. Unless otherwise stated, in the present specification the following conventions of terms, which have the meanings indicated as in the definitions below, are used.

The term "BB84" means the quantum key distribution protocol described in [Bennett, Charles H., Brassard, Gilles. Quantum Cryptography: Public key distribution and coin tossing. "Proceedings of the IEEE International Conference on Computers, Systems, and Signal Processing, Bangalore", 1984, p. 175], in which the sender sends a sequence of qubits the states of which correspond to the bit sequence he holds and the receiver measures the individual qubits in two measurement bases. The cryptographic key is created by the disclosure by the receiver of the bases in which the measurements were made and the information on which of the measurement results the receiver should keep.

The term "D-Shape" for the purpose of describing the present invention means a D-shaped mirror which is formed by cutting a circular mirror in half. This shape allows the laser beam to be split into two smaller beams which are then directed in different directions. Another term to describe this device in English is pickoff mirror.

The term 'ebit' refers to the basic unit for the entanglement of two qubits. This is the value of entanglement that the maximally entangled states of two qubits have, e.g.. one of Bell states. Generation of a new ebit requires a local operation on both qubits together, while after the generation the qubits can be spatially separated while remaining an ebit. In the simplest scenario, the source between Alice (the transmitter) and Bob (the receiver) generates pairs of photons, each photon being a polarised qubit. In addition, the photons are mutually polarisation-entangled, so ideally they form an ebit. One ebit allows no more than one key bit to be received in the quantum key distribution protocol. A bit, on the other hand, is understood to be a quantity taking on one of two discrete values denoted as 0 and 1. A qubit is a quantum bit, where it stands for 0,1 or a coherent superposition e.g. $(|0\rangle + |1\rangle)/\sqrt{2}$. A maximum of 1 bit of information can be written in a qubit and it is a local creation.

The term "E91" means the quantum key distribution protocol described in [Artur K. Ekert "Quantum cryptography based on Bell's theorem" Phys. Rev. Lett. 67, 661, 1991], in which the key is generated using polarisation measurements of polarisation-entangled photon pairs and public reconciliation of measurement bases, while security is ensured by Bell's inequality test.

The term "FPGA" stands for Field Programmable Gate Array. For the developer, it has the same functionality as a specialised integrated circuit, but can be repeatedly programmed without disassembly, once it has been manufactured and installed in the target device. FPGA is one of two families of highly integrated programmable digital logic circuits.

The term "heralding" means the detection of a photon the presence of which is correlated with the presence of the other photon. It means that the generation of the entangled photon pair (ENG) was successful. The method often used to detect the generation of entangled photon pairs in SPDC, in which case the detection of one photon confirms/heralds the presence of the other, even though the other photon is not directly detected.

The term "HWP" (Half Wave Plate) means an optical element made up of a layer of birefringent material, which allows a transformation of light polarisation for a fixed range of light wavelengths. In particular, for linear polarisation, depending on the position of the element with respect to the direction of polarisation of light, the polarisation direction can be rotated by a selected angle. A frequently used position of the element rotates H polarisation to V polarisation, and vice versa, V polarisation to H polarisation.

The term "MZI" stands for Mach-Zehnder Interferometer.

The term "channel" means the optical path followed by light beams (including single photons) characterised by the same wave vector modes which are emitted by an angle-multiplexed multi-mode quantum memory. For example, into the Mach-Zehnder interferometer, 2M optical channels enter, which are connected pairwise to form one optical channel, hence at the output of the MZI there are M optical channels.

Long distance communication is hindered by the signal loss and decoherence inherent in most means of communication, such as fibre optics. In conventional communication, amplifiers can be used to amplify the signal during transmission, but in a quantum network, amplifiers cannot be used because qubits cannot be copied - known as the no-cloning theorem. That is, in order to implement an amplifier, the full state of the flying qubit would have to be established, which is both undesirable and impossible.

The term "mirror" for the purpose of describing the present invention means a flat mirror.

The term "MOT" stands for magneto-optical trap and refers to a device that uses laser cooling with magneto-optical trap in order to produce samples of cold, trapped, neutral atoms (according to the invention, rubidium-87) at very low temperatures, of a few microkelvins ($\sim \mu K$, i.e. a value close to -273,150°C), which is far below the read-out capability of known thermometers.

The term "multiplexation" means multiplexing or multiplexation, in telecommunications, these are methods of realising two or more communication channels (e.g. telephone) in a single transmission medium (e.g. cable pair, optical fibre, air, etc.). Multiplexing allows the number of transmission media used, especially cables, to be reduced. Multiplexing was first introduced for the transmission of telephone signals in 1910. In the case of optics, this means realising several channels of information using a single medium which is a single beam of light.

The term "PBS" for the purpose of describing the present invention means Polarising Beam Splitter.

The term "DLCZ protocol" means a protocol for repeating quantum signals over a distance, using a method for generating quantum entangled states of light and an ensemble of atoms for the purpose of transferring entanglement between remote locations by means of optical channels and a system of quantum repeaters, and a method for exchanging entanglement between two ensembles of atoms, based on interference and measurement of the number of photons made on the optical portion of the entangled states associated with each ensemble of atoms. This protocol includes a systematic algorithm leading to an entanglement transfer that determines the operation of each of the quantum repeater stations [see: Duan, L., Lukin, M., Cirac, J. Zoeller, P. Nature 2001, 414, 413-418; https://doi.org/10.1038/35106500].

The term "QCI" stands for Quantum Communication Infrastructure.

The term "QKD" stands for Quantum Key Distribution.

The term "QWP" stands for Quarter-Wave Plate, after passing through which light can change its polarisation. On a path equal to the thickness of the plate, light with the fast-axis direction of polarisation overtakes light with the slow-axis direction of polarisation by a quarter of a wavelength.

The term "SPDC" means parametric fluorescence, also known in the literature as Spontaneous Parametric Down-Conversion or parametric scattering.

The term "entangled state" means a type of correlated quantum state of two or more quantum systems (quantum entanglement). It has the feature, impossible in classical physics, that the state of the whole system cannot be described by giving the states of its partial sub-systems.

The term "superposition" denotes a property of a quantum system resulting from the generalisation of probabilities to probability amplitudes, introduced by quantum theory. The term refers to the states in which a system can be found. Each state corresponds to a certain result of a hypothetical measurement on the system. A system being in a superposition of states can, as a result of measurement, probabilistically produce one of a number of results corresponding to the component states of the superposition. Each of the states in superposition corresponds to a coefficient expressed by a complex number and called the probability amplitude.

The term "*no-cloning theorem*" refers to the theorem stating that a copy of an unknown quantum state cannot be made. This theorem was formulated and proved by William Wootters and Wojciech Żurek [W. Wootters, and W. Żurek, "A Single Quantum Cannot be Cloned" Nature, 1982, 299, 802-803] and independently by Dennis Dieks [D. Dieks, "Communication by EPR devices", Physics Letters A, 1982, 92 (6): 271-272.], and is fundamental to the theory of quantum mechanics, quantum cryptography and quantum computer science.

## Embodiments of the invention

The following examples are included only to illustrate the invention and to explain particular aspects thereof, and not to limit it, and should not be construed as the entire range thereof which is defined in the appended claims.

In the following examples, unless otherwise indicated, standard materials and methods used in the field were used or manufacturers' recommendations for specific materials and methods were followed.

## EXAMPLE 1

*Configuration of the Mach-Zehnder interferometer (MZI) for generating entangled states of multiple angular modes*

The detailed structure of the Mach-Zehnder interferometer (MZI) is shown in the accompanying figures (see Fig. 1 and Fig. 2). In both figures, the following designations were used for the individual elements:
1 - Zolix TSM13-2 translation stage including micrometer adjustment screw; 2 - mirror holder-this element is self-made and allows the mirror to be placed in the kinematic mount (element 10); 3 - schematic representation of a laser beam; 4 - D-Shape. A mirror cut at a certain angle, with a sharp edge so that a part of the beam can be reflected and the other part can pass through - (https://www.thorlabs.com/thorproduct.cfm?partnumber=BBD05-E03); 5 - wave plate (HWP) in a rotating holder. Holder (called rotation mount) from ThorLabs - (https://www.thorlabs.com/thorproduct.cfm?partnumber=RSP05/M#ad-image-0); 6 - Polarising Beamsplitter (PBS) cube, from ThorLabs (https://www.thorlabs.com/thorproduct.cfm?partnumber=PBS122); 7 - broadband dielectric mirror from ThorLabs (https://www.thorlabs.com/thorproduct.cfm?partnumber=BB1-E03); 8 - translation stage from Opto-Sigma (https://europe.optosigma.com/steel-extended-contact-x-stage-65x65mm-size-side-drive-metric-threads-226.html); 9 - a base made of aluminium, to which other elements are attached; 10 - small kinematic mount from ThorLabs - (https://www.thorlabs.com/thorproduct.cfm?partnumber=MK05/M#ad-image-0); 11 - D-Shape holder - made of aluminium; 12 - Mirror holder, made of aluminium.

The invention uses the Mach-Zehnder interferometer in the present configuration, shown above.

## EXAMPLE 2

*Generator of multi-mode entangled photon states in the configuration of Mach-Zehnder interferometer with multi-mode quantum memory*

The essence of the generator according to the invention is that the multi-mode quantum memory is capable of generating pairs of entangled delayed photons, with a maximum delay in the order of 50-100 microseconds ($\mu$s). The memory is equipped with two MZI interferometers that convert 2M memory channels into M channels in which entangled photon states are generated.

The spatial and temporal parameters of the generated photons are determined by a central element, i.e. the quantum memory.

The frequency of photon A is determined by the frequency of laser W, which is equal to: (384.230484 THz + 4.271 GHz - 73 MHz ± 30 MHz) - 6.834682 GHz. Preferably, laser W is red-detuned from the F=1->F'=2 transition on the D2 line of rubidium-87 ($\lambda \approx 780$ *nm*) by 20 MHz and clockwise circularly polarised.

The frequency of photon B is, in turn, determined by the frequency of laser R, which is equal to: (377.107463 THz - 2.563 GHz + 306 MHz ± 10MHz) + 6.834682 GHz. Preferably, laser R is in resonance with the F=2->F'=2 transition on the D1 line of rubidium-87 ($\lambda \approx 795$ *nm*) and counterclockwise circularly polarised.

The frequency of the laser beam is expressed by the formula:

$$frequency = c/\lambda$$

The size of angular correlations between photons is equal to the inverse of the transverse size of the cold atom cloud, as long as lasers R and W emit beams that completely uniformly illuminate the cold cloud of the rubidium atoms of the cell. The transverse size of the cold cloud of atoms is preferably 0.5 mm.

The spectral width of photon A is equal to the inverse of the duration of pulse W, advantageously the pulse duration is 100-300 ns.

The spectral width of photon B is determined by the time constant of the excitation read-out rate during operation of laser R, which is proportional to the power density of the beam of laser R and the optical density of the cold atom cloud. The read-out time constant is between 50 and 300 ns, preferably 100 ns.

In contrast, the phase $\varphi$ of the entangled state is determined by the interferometers' setting, which phases can vary from channel to channel.

The general entangled state is described by the following equation:

$$(|HD\rangle + exp\,(i\varphi)|VD_\perp\rangle)/\sqrt{2}$$

where $D$ - any polarisation (here of photon B), and $D_\perp$ polarisation perpendicular to $D$;
H and V are the horizontal and vertical polarisation of photon A, while $\varphi$ - is the phase of the entangled state.

Thus, in total, there are 3 phases - $\varphi$ and two phase angles defining the position of polarisation D on the Poincaré sphere (like longitude and latitude).

With a precise setting of the interferometer, where all diagonal surfaces are exactly parallel, (in practice this setting is verified by additional interference measurements) the phase $\varphi$ is equal to:

$$2\pi[(L_{A,u} - L_{A,d})/\lambda_A + (L_{B,u} - L_{B,d})/\lambda_B]$$

where L- arm length A/B of the interferometer A/B, u/d upper/lower arm, $\lambda$ - wavelength of the photon.

Small sections of wide beams correspond to the individual channels, for even setting of the interferometer. The present differences are the same for each channel, but a slight tilt of any mirror in either arm of the interferometer will cause the phase $\varphi$ to vary from channel to channel.

Thus, directly behind the interferometers, the following was obtained:

$$(|HH\rangle + exp\,(i\varphi)|VV\rangle)/\sqrt{2}$$

By inserting 2 plates (HWP and QWP) in the path of the second photon, one can switch from H/V polarisation to any polarisation $D/D_\perp$

This effect can be completely compensated by performing an appropriate polarisation rotation in the arm A by inserting 2 plates (HWP and QWP), as long as the phase $\varphi$ is constant, which also requires a case-by-case calculation.

MZI interferometers select and pair 2M quantum memory output channels. By adjusting the setting of the interferometers with the micrometer adjustment screw (Fig. 1 (1)) controlling the position of the mirror (Fig. 1 (12)), a smaller number of channels but with longer memory lifetimes or a larger number but with shorter lifetimes can be selected.

The experimentally determined number of quantum memory channels according to the invention is M=665 (https://www.nature.com/articles/s41467-017-02366-7), which can be increased by using an objective/lens with a larger angular aperture. The expected maximum number of quantum memory channels should reach M=100000.

**Structure and operation of the system**

The central element of the quantum memory consists of a magneto-optical trap MOT [US8835833B2] using cooling ($\lambda$ = 780 *nm*) and repumping ($\lambda$ = 795 *nm*) laser pulses to prepare cold rubidium-87 atoms in a magnetic field. The pulses and therefore the trapping time is preferably 2 ms. The magnetic field, generated by means of several coils located around a cell containing cold rubidium-87 atoms. The magnetic field is intended to compensate the external magnetic field.

The magnetic field is generated by means of 3 pairs of large "earth" coils compensating the Earth's field and adding a magnetic field of about 1 gauss along the cloud (z), preferably the magnetic field is between 0.1 gauss and 2.0 gauss.

Furthermore, the system comprises one quadrupole coil according to MOT [US8835833B2] generates a gradient of about 10 G/cm in the x and y directions and about 1 G/cm in the z direction. The quadrupole coil is switched on during trapping (necessary to successfully trap rubidium-87 atoms) and then quickly switched off. For comparison:

$$1\ T = 10\ 000\ G$$

The cloud of cold rubidium-87 atoms in the MOT is elongated in its shape, with a size of 10 mm along the (z) axis and 0.5×0.5 mm along (x) and (y) axes.

Immediately after the trap is turned off, the cloud of cold rubidium-87 atoms is illuminated by three lasers intended to transfer the rubidium-87 atoms to the state $5S_{1/2}$, $F$ = 1, $m_F$ = -1. The first laser, hereinafter referred to as the optical hyperfine pump, is tuned to the D2 line transition $F = 2 \to F' = 2$ and illuminates the cloud of atoms from six sides (x+z,x-z,y). Pulses from this laser, which preferably last 15 $\mu s$ in the optical pumping process, transfer atoms to the state $F = 1$. The laser, hereinafter referred to as the Zeeman optical pump, is responsible for transferring the atoms to the selected ($m_F = -1$) Zeeman level, whereby this laser is counterclockwise circularly polarised and illuminates the atoms along the cloud (direction z). The Zeeman optical pump (ZP) is tuned to the D1 line transition $F = 1 \rightarrow F' = 1$, which, together with the optical hyperfine pump, leads to the transfer of atoms to the expected state which is $5S_{1/2}$, $F = 1$, $m_F = -1$. The third laser pulse used in the optical pumping process is the laser R. It supports the optical hyperfine pump and clears the space between the cloud of atoms and the walls of the vacuum cell of non-trapped atoms being in the state $F = 2$.

On either side of the quantum memory, there are two optical systems placed in the axis, the systems consisting of objectives located at opposite ends of the MOT trap, and behind the objectives, there are optical filters, and behind the filters, there is the MZI interferometer (one on the 'A' side, the other on the 'B' side). The optical signal 'A' and 'B' after passing through the objective and then through appropriate filters enters the MZI interferometer.

Two lasers ('W and 'R', which are ECDL-type lasers), frequency-stabilised to the respective transitions in the rubidium atom, are directed towards the MOT trap.

The light beams from the lasers ('W and 'R') are directed towards the MOT trap at a slight angle to the axis (preferable angle is 1-10°, most preferably 1-5°), in which the objectives are located on either side of the MOT trap. Both lasers are directed with their beams axially towards the MOT trap. Both lasers emit light in the range corresponding to the D1 and D2 absorption lines of the rubidium-87 isotope atoms. Preferably, during write-out (excitation generation) - 780 nm, pulse of 100-300 ns duration, while during read-out - 795 nm, pulse of 100-300 ns duration. The light pulses transmitted by the two lasers are separated in time, i.e. the pulse of the second laser is delayed relative to the pulse of the first laser by 0-200 microseconds ($\mu s$) respectively. This is equivalent to the lifetime of a quantum memory.

When a cloud of rubidium-87 atoms is illuminated by laser pulses, Raman scattering and emission of scattered photons are expected. A useful proportion of the photons is captured by the objectives described above, the angular aperture of which is between 1 and 10 degrees, preferably 5 degrees. When the laser 'W is operating, the light is collected with the objective 'A' on which this laser falls, i.e. scattered at an angle of a few degrees, while the backscattered photons which pass through the opposite objective 'B' are stopped by a filter which is located further away. Filter 'A' passes scattered photons while stopping beam signals of laser 'W'. The observation of photon 'A' in the far field of objective 'A' at an exemplary position ($x, y$) relative to the optical axis indicates photon emission at an angle $x/f$ and $y/f$ relative to the planes $z - y$ and $z - x$ from the cloud of atoms. Such emission could have occurred through Raman scattering with simultaneous generation of a spin wave in rubidium-87 atoms with a wave vector equal to the difference of the wave vectors of the laser 'W' photon and photon 'A'. In the geometry under consideration, when scattering at a small angle, the wave vector of the generated spin wave is in the plane $x - y$. According to the indeterminacy principle, the wave vector of such a spin wave is determined with the precision of the inverse of the size of the cloud of atoms in the plane $x - y$. In view of what has been confirmed experimentally [Nat. Commun., **8**, 2140 (2017)], scattering of photons with wave vectors differing by more than the described indeterminacy leads to the generation of distinguishable spin waves.

All 'A' photons which are observable by the objective correspond to spin waves the wave vectors of which form a circle in the $x - y$ plane. The radius of this circle is determined by the angular aperture of the objective. By dividing this circle into cells (e.g. hexagonal, see Fig. 4) of a size determined by the described indeterminacy, independent memory channels are obtained. Each of these channels corresponds to the emission of photon 'A' into a hexagonal pyramid with its apex at the centre of the cloud and its base in the plane of the objective (see Fig. 4b and Fig. 4c). Behind the objective, the photon beam has a collimated form, i.e. approximately the form of a hexagonal prism. Dividing the full aperture of the objective into independent channels is therefore a division of the cylinder around the optical axis into a tall honeycomb, where the base of the cells is perpendicular to the optical axis of the system.

With the use of a cloud with a cross-sectional size of 0.5 mm and an angular aperture of the objective of 5 degrees, 2M=1000 independent channels are accommodated, the maximum number of expected channels is 2M=100000.

The objective used in the system must constitute a so-called diffraction-limited optical system in order not to disturb the quantum state. Diffraction-limited optical systems exhibit resolution consistent with the theoretical prediction for a given wavelength and aperture geometry, resulting from the phenomenon of light diffraction. Such a system does not introduce additional aberrations and thus preserves the structure of the quantum state of light.

The spin waves created in this way store information about the scattered photons, while their number and wave vectors are closely related to photons 'A'.

The longer the lifetime of spin waves is, the shorter their wave vector (smaller scattering angle) and the colder (less mobile) the atoms in the cloud are.

Illuminating a cloud containing spin waves with laser 'R' results in the conversion of each wave to photon 'B'. The wave vector of photon 'B' is equal to the sum of the wave vectors of laser 'R' and the spin wave.

Therefore, if the wave vectors of lasers 'W and 'R' are opposite (the respective light beams run opposite each other), then also the wave vectors of photons 'A' and 'B' are always opposite. Although the scattering direction of photon 'A' is random, the emission direction of photon 'B' is known because it is always opposite and parallel. Opposite channels of photons 'A' and 'B' are paired.

***Optional:***

For the correct statistical properties of the state obtained from the generator, it is needed that in each specific channel the probability of finding two photons 'A' is much smaller than finding one photon 'A'. The probability distribution of the number of photons in a single channel is given by the Bose-Einstein distribution and in all channels together by a negative binomial distribution, which for the large number of channels described is close to the Poisson distribution [W. Wasilewski, C. Radzewicz, R. Frankowski and K. Banaszek, Statistics of multiphoton events in spontaneous parametric down-conversion Phys. Rev. A 78, 033831 (2008), preprint - arxiv:0805.1701]. Therefore, in order to meet the said condition, the average number of scattered photons in each channel must be kept well below 1, preferably 1/100.

Two microscope objectives for observing photons (resolution of at least 5 micrometres [$\mu$m]) on both sides of the quantum memory, keeping the channels divided (left channel-photons 'A', and right channel - photons 'B').

In the system, objectives (or lenses) are placed on either side of the MOT trap, before entering the MZI interferometers.

Between the objectives and the MZI, interference filters are placed, followed by absorption filters in the form of a glass cell with rubidium vapors, heated in the temperature range of 50-90 °C, and optically pumped to be transparent to photons from Raman scattering, and to absorb light beams emitted by lasers [PAT.234407B1].

The pumping light beams are switched off during detection of entangled photons so that they do not generate interference during detection.

Then, photons with different wave vectors are emitted from the quantum memory in the left or right direction (channel) depending on the process: write-out (generation of excitations with laser 'W') or read-out of the memory (conversion of excitations into photons with laser 'R').

The signal from 2M channels passes through the objectives where it is collimated. Then, the signal from 2M channels enters the MZI, where it is first divided into two parts of equal size using a mirror with a sharp edge (D-Shape). Half of the optical signal field (M channels, designation 'd' in Fig. 3) is reflected, while the other half (remaining M channels, designation 'u' in Fig. 3) passes through.

The first half of the signal bounces off the mirror and enters the PBS, the other part of the signal bounces twice off the mirrors, passes through the HWP where its polarisation rotates and enters the PBS where it combines with the first part of signal M.

At the output of the MZI interferometer, M channels are thus obtained, with each channel carrying a signal from the memory either along the 'u' path with 'H' polarisation or along the 'd' path with 'W' polarisation (see Fig. 3).

In this manner, the initial entanglement between the directions of pairs of photons 'A' and 'B' from among 2M directions directly from the memory was changed into polarisation entanglement between pairs of photons 'A' and 'B' from among M channels.

The desired quantum state is the state between the plane at the output of interferometer 'A' and the plane at the output of interferometer 'B'.

The method of operation of the quantum signal generator consists of the following steps:

1. step of trapping rubidium atoms in MOT, the total duration of this step is about 2 ms, the following sub-steps can be listed:

   a. MOT loading during which the cooling laser, repumping laser and magnetic field gradient are activated, this step lasts approximately 1 ms
   b. step of densifying the cloud of cold rubidium-87 atoms, the intensity of the cooling laser is decreased linearly to 30% of maximum intensity (4 mW/cm^2), this is performed with the magnetic field gradient and the repumping laser switched on, this step lasts about 700 microseconds
   c. step of additional cooling during which the magnetic field gradient is switched off and the cooling laser is red-detuned by an additional 10 MHz, this step lasts about 300 microseconds

2. the step of transferring atoms to state $5S_{1/2}$, $F = 1$, $m_F = -1$ by optical pumping, using pulses from three lasers - an optical hyperfine pump, a Zeeman pump and preferably a laser R - read-out - 795 nm, pulses about $15\mu s$. In this step, the rubidium-87 atoms reach the energetic ground state

3. step of generating photons A by a pulse from laser W - write-out (excitation generation) - 780 nm, the pulse of about 100-300 ns

4. step of waiting, adjustable in length (duration from 0 to 100 $\mu$s) without illuminating the cloud of cold rubidium-87 atoms in the MOT

5. step of reading out photons B by a pulse from laser R - read-out - 795 nm, the pulse lasting preferably 50-500 ns, most preferably 100-300 ns

Verification of proper operation of the generator is based on the registration of polarisation correlations between photons 'A' and photons 'B'. For this purpose, photons 'A' pass through an imaging analyser and fall on one camera area, while photons 'B' pass through analyser 'B' and fall on the other camera area (see Fig. 3b and Fig. 3c). The experiment is performed repeatedly and the frequency of pairs recording is plotted against the position of the analysers for each pair of channels. The results will be compiled according to the CHSH methodology.

The CHSH methodology consists in calculating the correlation function between images captured on camera for 4 combinations of analyser 'A' and 'B' settings, with analyser 'A' set to one of 2 positions and analyser 'B' set to one of 2 positions. The correlation functions obtained allow formulating a quantity allowing the presence of entangled states to be verified. The quantity, hereafter referred to as the visibility of the Bellow state measurement, is given by a mathematical equation:

$$V = (2\sqrt{2})^{-1}[C(a,b) + C(a,b') + C(a',b) - C(a',b')]$$

where $C(x, y)$ denotes the correlation function between analyser A at the x setting and analyser B at the y setting. The analyser settings indicated as a, a' and b, b' are chosen to maximise the visibility expression. https://en.wikipedia.org/wiki/CHSH inequality (J.F. Clauser; M.A. Horne; A. Shimony; R.A. Holt (1969), "Proposed experiment to test local hidden-variable theories", Phys. Rev. Lett., 23 (15): 880-4, *doi:10.1103/PhysRevLett.23.880).*

Obtaining, as a final result, a visibility value above $1/\sqrt{2}$ confirms photon entanglement.

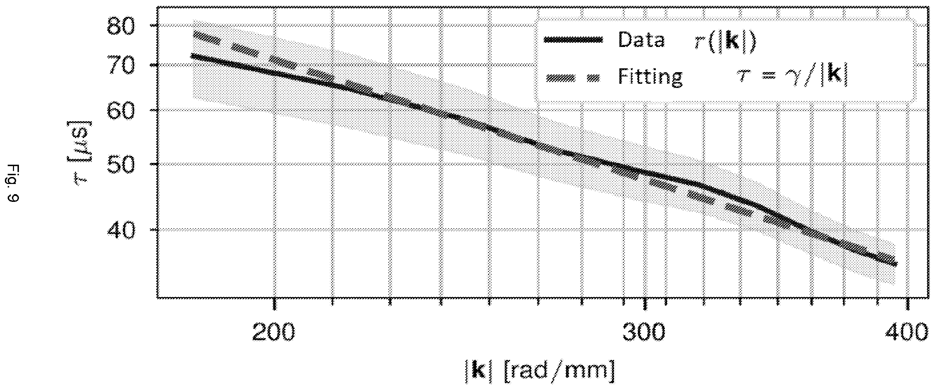

Experimentally, in the system according to the invention, a different result is obtained independently for each pair of M=500 channels (see Fig. 9). The results show that as the time of storing photons in quantum memory increases, the probability of reading out the entangled state of photons decreases. For each channel, a so-called decoherence time is determined, which is defined as the waiting time after which the probability of reading out the state decreases to 37% of the initial value (i.e. the value for zero waiting time). Depending on the channel, this time ranges from 50 to 100 $\mu s$.

**EXAMPLE 3**

*Example showing the method for repeating a quantum signal, in the system according to the invention.*

According to the scheme of the method for repeating a quantum signal between a transmitter of entangled states and at least one receiver (often referred to as Alice and Bob in the literature). Between the transmitter and the receiver, quantum signal repeater stations are placed in series, i.e. one behind the other. Each station consists of two MOT quantum memories (which consist of cold rubidium 87 - $^{87}$Rb atoms) configured to generate entangled photon pairs, whereby the second photon is generated with an adjustable delay during which the first photon is entangled with the state of the quantum memory itself. The longer one waits to read the second photon, the lower the read-out efficiency, in particular individual modes break down at different rates. The preferable time to read the second photon from the MOT is in the order of 50-100 microseconds. The read-out delay is freely adjustable. The read-out occurs when the read-out laser is switched on, and this is controlled by the FPGA which synchronises the entire system to repeat the quantum signal. In general, the delay of the second photon can be controlled by any electronic circuit with a clock (FPGA, microprocessor, logic circuit, analogue clock).

Each station also has an entanglement exchange substation that performs a measurement on the photons read from both station memories. According to the method protocol, the basic principle is the hierarchical entanglement of adjacent quantum memories. Consider a fragment of such a network. Between the repeater stations, there are entanglement generation stations. Stations X and Y each send the first photon from one of their memories to the entanglement generation station located between them. The quantum measurement of both photons probabilistically results in an entangled state of memories X and Y. In the next step, Y sends the first photon from its second memory to the station between Z and Y, and Z sends there its first photon from its first memory. Thus, with some probability, a measurement on both photons results in the entanglement of the second memory Y and the first memory Z. At this point, the first and second memories Y are read and the entanglement exchange substation performs a measurement on the read photons, resulting in the entanglement of the distant memories X and Z. Analogously, entanglement can be extended to further repeater stations.

The procedure described is probabilistic and sensitive to losses and imperfections. In particular, the limited lifetime of quantum memories (i.e. the quantum states stored therein, which is 50-100 microseconds) and their read-out efficiency make the practical realisation of quantum repeaters difficult. The use of parallel or multiplexed architectures that use hundreds of quantum memories in each repeater may be a solution to this problem.

The invention according to the method category allows for a parallel or multiplexed quantum repeater architecture which is equivalent to multiple quantum memories being physically independent modes of a single multi-mode quantum memory realised in a single assembly of cold rubidium-87 atoms. Each memory mode corresponds to a different range of emission angles of the generated photons [M. Parniak, et al, Nature Communications, 2017, 8, 2140, https://doi.org/10.1038/s41467-017-02366-7], see Fig. 4. The invention, together with the optical system, allows the modes to be superimposed pairwise, simultaneously imparting orthogonal polarisations to photons in each mode of one pair. This enables the creation of a multi-mode generator of polarisation-entangled states of light, which is an elementary component of a quantum optical signal repeater.

The individual components of the optical signal repeater system are connected to each other by optical channels in the form of optical fibres or air channels.

The precise structure of the system according to the described invention is found in the figures of the drawing and also in the descriptions of these figures.

## EXAMPLE 4

*Example showing a system for repeating a quantum signal*

*a) Components of the system for repeating an optical quantum signal.*

The system for repeating a quantum signal contains a multi-mode quantum memory-designated as MOT - the structure of which is known in the literature [M. Parniak, et al, Nature Communications, 2017, 8, 2140, https://doi.org/10.1038/s41467-017-02366-7] additionally equipped with a sub-system which allows the generation of entangled states of light in a polarisation degree of freedom, located in the path of write-out/heralding photons to the memory. This sub-system is composed of a far-field imaging system of photons emitted from an ensemble of atoms, which is the central element of the quantum memory, and an ensemble of optical elements in a Mach-Zehnder interferometer (MZI) configuration. The assembly of optical elements is configured to allow division of the imaged emission area into 2 equal parts, polarisation transformation in one of these parts using a standard half-wave plate (HWP), and then superimposing the two previously separated parts of the signal.

Optionally, the system for repeating a quantum signal also includes an optical multiplexer and/or demultiplexer to allow photons read from the memory to be directed into the transmission fibre, regardless of the angle of emission from the quantum memory.

*b) Detailed method of operation of the system for repeating an optical quantum signal.*

A sub-system of optical elements creates a far-field image of photon emission from an ensemble of atoms of the memory. The emission is forced during a write-out-to-memory operation and indicates the creation of quantum entanglement between the state of atoms and the direction of photon emission. Far-field imaging transforms the direction of emission to the photon position. The system of the modified Mach-Zehnder interferometer divides the photon position range into 2 parts which are directed into 2 other arms of the interferometer. In one of the arms, a linear transformation of the polarisation of light takes place so that the polarisations of the signal in both arms of the interferometer are orthogonal to each other. In the final step, both parts are coherently superimposed so that each position in which a photon can appear corresponds, with probability amplitude having an equal modulus, to a photon having one of the 2 polarisations and thus emitted in one of the 2 directions. Thus, a superposition of the combined states of atoms and emitted light is created for multiple emission directions simultaneously. This allows parallel operations of the system for repeating a quantum signal to be performed because each direction can operate as an equivalent of a separate quantum memory.

*c) Comparison of the invention to solutions known in the state of the art*

An important feature distinguishing the system for repeating a quantum signal according to the invention from known solutions of the state of the art is the possibility to realise, in one physical system (ensemble of cold rubidium atoms - $^{87}$Rb), an equivalent of several hundred systems known so far. Parallel operation of such a system increases the efficiency achieved by several hundred times. It is also possible to use an optical multiplexer and/or demultiplexer at the output of the memory which allows an additional efficiency increase, which depends on the details of the protocol used.

Obtaining an equivalent of multiple repeaters in a single system is possible through the use of multi-mode quantum memory and a specifically designed optical system that allows the selective transfer of entanglement from the degree of freedom represented by the photon emission angle to the degree of freedom represented by the photon polarisation. This enables the use of standard protocols of entanglement generation and exchange, while allowing the full potential of quantum memory to be exploited.

## EXAMPLE 5

*Example showing the use of a repeater to repeat a quantum signal over a distance in an ahierachical system and in a semi-hierarchical system*

The entangled photon transfer cycle consists of a quantum entanglement generation (ENG) step between distant repeaters and an entanglement connection (ENC) step between two memories (ensembles of atoms) within a single repeater station. Then, each of these steps for each repeater station will succeed with a certain probability.

In addition, it is known from the system according to the invention whether the generation of quantum entanglement in ENG has succeeded, as indicated by the detection of a photon pair. If the generation of a pair of entangled photons (in ENG) between, e.g. A' and B and B' and C, is successful, then it is known that the next step, the entanglement connection (ENC) step between B and B', can be performed.

Thus, in the system according to the invention with an ahierarchical architecture (see Fig. 8a), each quantum signal repeater assumes that all steps for all repeaters have succeeded and always performs the entangled photon generation (ENG) and the entanglement connection (ENC) step. Synchronisation between all repeaters is ensured by only one global clock which has a period sufficient to perform ENG and ENC.

In turn, in a hierarchical architecture, full communication is ensured, i.e. A' and B try to generate entangled photon pairs (ENG) until they succeed and B' and C try to generate entangled photon pairs (ENG) until they succeed, at the moment when A' and B succeed in ENG, then B will wait before performing ENC to B' until B' confirms that it succeeded in ENG with C etc. Effectively, all stations form a hierarchical tree where each segment waits until the segment next to it is ready. Such an approach requires a very large amount of time for mutual communication between repeaters -- a time that far exceeds the time needed for ordinary communication between the most distant repeaters. This results in the need for very long storage periods for quantum memories, which is not provided by current technology.

In the system for repeating a quantum signal, incorporating a semi-hierarchical architecture, a compromise is provided (see Fig. 8b). Instead of full communication between any repeaters, there is one central station that collects information from all repeaters on their success in generating entangled photon pairs (ENG). When they all confirm that they have successfully generated pairs of entangled photons (ENG), then the central station sends a signal that all are now to perform an entanglement connection (ENC). Communication time (and coherence time requirements for quantum memories) are longer than in case of ahierarchical architecture, but shorter in case of hierarchical architecture. In turn, for certain systems (clearly not for our memory) this approach may result in better efficiency of entanglement transfer. This occurs when the distances to the central station are small enough (or the memories live long enough) that when some repeaters succeed in ENG, they can wait for others to try until they succeed.

### Acknowledgements

The inventors would like to thank the Centre for Quantum Optical Technologies (QOT, Project no MAB/2018/4) at the University of Warsaw, which is conducted within the framework of the International Research Agendas programme of the Foundation for Polish Science and co-financed by the European Union from the Intelligent Development Operational Programme (priority axis IV, activity 4.3.).

### Claims

1. A system for generating polarisation-entangled photon pairs for repeating a quantum signal over a distance, comprising a multi-mode quantum memory which comprises a magneto-optical trap (MOT) equipped with magnetic coils for retaining atoms, cooling lasers, pumping lasers for additional illumination of the trap, as well as a Write (W) laser and a Read (R) laser, wherein the quantum memory is optically coupled to two Mach-Zehnder interferometers (MZI) aligned in one axis on both sides of the quantum memory, and between the quantum memory and each of the Mach-Zehnder interferometers (MZI) , there is an objective, at least one filter and wave plates, **characterised in that** the magneto-optical trap (MOT) is configured to produce a gas of laser-cooled atoms, illuminated by laser light, which, during illumination, generates and emits pairwise entangled photons (A and B) in at least 10 different directions, preferably 1000 directions, in the optical path of each direction of the photons (A and B) there is an objective the angular aperture of which is between 1° and 10°, preferably 5°, which is located between the magneto-optical trap (MOT) and the Mach-Zehnder interferometer (MZI), while the Mach-Zehnder interferometers (MZI) are aligned relative each other and configured to pair channels in optical paths, where always half of the channels is H-polarised and the other half is W-polarised.

2. The system according to claim 1, **characterised in that** in the optical path of single photons A and B, there are interference and/or absorption filters for stopping the light beam of lasers W and R, respectively, and letting through photons A and B, and preferably these filters include consecutive: an interference filter and an atomic absorption filter.

3. The system according to claim 1 or 2, **characterised in that** the Write W and Read R lasers are directed towards the magneto-optical trap (MOT) opposite each other and are configured to emit beams uniformly illuminating the cloud of cold atoms at an angle of 1-10°, more preferably 1-5°, with respect to the axis of the system, so that it is possible to stop most of the laser light with an aperture in the focal plane of the objective.

4. The system according to any of claims 1-3, **characterised in that** the quantum memory is equipped with two Mach-Zehnder interferometers (MZI) for converting 2M memory channels into M memory channels by generating polarisation-entangled states of the emitted photons.

5. The system according to any of claims 1-4, **characterised in that** between the Mach-Zehnder interferometer (MZI) and the magneto-optical trap (MOT), in the optical path, there is, furthermore, a half-wave plate (HWP) and/or an additional quarter-wave plate (QWP) configured to convert the polarisation of the photons emitted from the memory to horizontal or vertical polarisation.

6. The system according to any of claims 1-5, **characterised in that** in one of the arms of the Mach-Zehnder interferometer (MZI), an additional half-wave plate (HWP) is provided, configured to combine photons from both arms on a polarising beamsplitter (PBS) cube, so that these photons come out of this plate together in one direction.

7. The system according to any of claims 1-6, **characterised in that** in both of the Mach-Zehnder interferometers (MZI) there are precision screws for adjusting the position and inclination of the mirrors (7).

8. The system according to any of claims 1-7, **characterised in that** the multi-mode quantum memory comprises, in the magneto-optical trap (MOT), optically cooled alkali metal atoms (IUPAC Group 1), in a gas form, in particular as mixtures of naturally occurring isotopes or in the form of pure isotopes of the following elements: lithium, especially $^6$Li or $^7$Li, sodium, especially $^{23}$Na, potassium, especially $^{39}$K or $^{41}$K, rubidium, especially $^{85}$Rb or $^{87}$Rb, caesium, especially $^{133}$Cs.

9. The system according to any of claims 1-8, **characterised in that** the beam of laser W is clockwise circularly polarised and red-detuned from the F=1 → F'=2 transition on the D2 rubidium-87 line by 20-30 MHz, i.e. in the frequency domain of 384230484 MHz + 4272 MHz - 73 MHz ± 30 MHz.

10. The system according to any of claims 1-9, **characterised in that** the beam of laser R is counterclockwise circularly polarised in resonance with the F=2 → F'=2 transition on the D1 rubidium-87 line, i.e. in the frequency domain of 377107463 MHz - 2563 MHz + 306 MHz + 10MHz.

11. The system according to any of claims 1-10, **characterised in that** it comprises at least one quadrupole coil capable of generating a gradient of at least 10 gauss/cm in the x and y directions and at least 1 gauss/cm in the z direction.

12. The system according to any of claims 1-11, **characterised in that** the transverse dimension of the cold cloud of atoms is more than 0.2x0.2 mm, preferably 0.5x0.5 mm, and the longitudinal dimension of this cloud is more than 5 mm, preferably 10 mm.

13. A method for generating entangled photon pairs in a multi-mode quantum memory for repeating a quantum signal over a distance, implemented in the system according to any of the preceding claims, including the following steps:

a) alkali metal atoms (IUPAC Group 1), in a gas form, in particular as mixtures of naturally occurring isotopes or in the form of pure isotopes of the following elements: lithium, especially $^6$Li or $^7$Li, sodium, especially $^{23}$Na, potassium, especially $^{39}$K or $^{41}$K, rubidium, especially $^{85}$Rb or $^{87}$Rb, caesium, especially $^{133}$Cs, preferably rubidium-87 atoms, are trapped in a magneto-optical trap (MOT), especially using the magnetic field of a quadrupole coil and cooling laser beams;

b) Atoms are optically pumped with a laser beam to their ground state, preferably in rubidium-87 to state $5S_{1/2}$,

$F = 1$, $m_F = -1$;

c) photons A are generated by means of a pulse from laser W, the Write laser generates excitations with a wavelength in the range of 775-785 nm, preferably 780 nm, these pulses last 50-500 ns, preferably 100-300 ns, and photons A pass through a Mach-Zehnder interferometer (MZI);

d) the arrival of a read-out request is awaited for;

**characterised in that**
the method further includes the step:

e) photons B are read by means of a pulse from laser R which emit a laser beam with a wavelength in the range of 790-800 nm, preferably 795 nm, the pulses last preferably 50-500 ns, most preferably 100-300 ns, and photons B pass through a Mach-Zehnder interferometer (MZI), wherein

in the magneto-optical trap (MOT) a gas of laser-cooled atoms is produced, illuminated by laser light, which, when illuminated, generates and emits pairwise entangled photons (A and B) in at least 10 different directions, preferably 1000 directions, with an adjustable delay of more than 50 nanoseconds, preferably in the range of 50-100 microseconds, and by means of Mach-Zehnder interferometers (MZI) 2M optical channels are pairwise combined into M optical channels, wherein always one channel of the pair is H-polarised and the other channel is W-polarised, so that a multi-mode polarisation-entangled state is generated.

14. The method according to claim 13, **characterised in that** the angle-multiplexed multi-mode quantum memory emits photons in different directions/modes, wherein a first photon is emitted in a random direction among at least 10 different directions available, and then a second photon is emitted in a closely correlated direction, preferably opposite to the first photon, and in the period between the first photon and the second photon, the information about the direction of emission is encoded as a quantum signal in the form of a spin wave vector of an ensemble of cold atoms.

15. The method according to claim 13 or 14, **characterised in that** the quantum memory emits photons scattered in the direction of channels (A) and (B), respectively, when illuminating the cloud of cold atoms with pulses of the Write (W) and Read (R) lasers due to Raman scattering.

**Patentansprüche**

1. Ein System zur Erzeugung von den in der Polarisation verschränkten Photonenpaaren zur Wiederholung eines Quantensignals über eine gewisse Entfernung, das einen Multimode-Quantenspeicher umfasst, der eine magneto-optische Falle (MOT) mit Magnetspulen zum Festhalten von Atomen, Kühlungslasern und Pumplasern zur zusätzlichen Beleuchtung der Falle, sowie einen Schreiblaser (W) und einen Leselaser (R), umfasst, wobei der Quantenspeicher optisch mit zwei Mach-Zehnder-Interferometern (MZI) gekoppelt ist, die in einer Achse auf beiden Seiten des Quantenspeichers ausgerichtet sind, und zwischen dem Quantenspeicher und jedem der Mach-Zehnder-Interferometer (MZI) ein Objektiv, mindestens ein Filter und Wellenplatten vorhanden sind, **dadurch gekennzeichnet, dass** die magneto-optische Falle (MOT) so konfiguriert ist, dass sie ein mit Laserlicht beleuchtetes Gas aus lasergekühlten Atomen erzeugt, das während der Beleuchtung paarweise verschränkte Photonen (A und B) in mindestens 10 verschiedenen Richtungen, vorzugsweise 1000 Richtungen, erzeugt und emittiert, wobei sich im optischen Pfad jeder Richtung der Photonen (A und B) ein Objektiv befindet, dessen Winkel Öffnung zwischen 1° und 10°, vorzugsweise 5°, liegt, das sich zwischen der magneto-optischen Falle (MOT) und dem Mach-Zehnder-Interferometer (MZI) befindet, wobei die Mach-Zehnder-Interferometer (MZI) relativ zueinander ausgerichtet und so konfiguriert sind, dass sie Kanäle in optischen Pfaden koppeln, wobei immer die Hälfte der Kanäle H-polarisiert ist und die andere Hälfte W-polarisiert ist.

2. Das System nach Anspruch 1, **dadurch gekennzeichnet, dass** im optischen Pfad der einzelnen Photonen A und B Interferenz- und/oder Absorptionsfilter vorhanden sind, um den Lichtstrahl der Laser W bzw. R zu stoppen und die Photonen A und B durchzulassen, und dass diese Filter vorzugsweise nacheinander umfassen: einen Interferenzfilter und einen Atomabsorptionsfilter.

3. Das System nach Anspruch 1 oder 2, **dadurch gekennzeichnet, dass** der Schreiblaser W und der Leselaser R auf die magneto-optische Falle (MOT) gerichtet sind, die einander gegenüberliegen, und so konfiguriert sind, dass sie Strahlen aussenden, die die Wolke kalter Atome gleichmäßig in einem Winkel von 1-10°, vorzugsweise 1-5°, in Bezug auf die Achse des Systems beleuchten, so dass es möglich ist, den größten Teil des Laserlichts mit einer Apertur in der Brennebene des Objektivs zu stoppen.

4. Das System nach einem der Ansprüche 1 - 3, **dadurch gekennzeichnet, dass** der Quantenspeicher mit zwei Mach-Zehnder-Interferometern (MZI) ausgestattet ist, um 2M Speicherkanäle in M Speicherkanäle umzuwandeln, indem die in der Polarisation verschränkte Zustände der emittierten Photonen erzeugt werden.

5. Das System nach einem der Ansprüche 1-4, **dadurch gekennzeichnet, dass** sich zwischen dem Mach-Zehnder-Interferometer (MZI) und der magneto-optischen Falle (MOT) im optischen Pfad außerdem eine Halbwellenplatte (HWP) und/oder eine zusätzliche Viertelwellenplatte (QWP) befindet, die so konfiguriert ist, dass sie die Polarisation der vom Speicher emittierten Photonen in eine horizontale oder vertikale Polarisation umwandelt.

6. Das System nach einem der Ansprüche 1-5, **dadurch gekennzeichnet, dass** in einem der Arme des Mach-Zehnder-Interferometers (MZI) eine zusätzliche Halbwellenplatte (HWP) vorgesehen ist, die so konfiguriert ist, dass sie Photonen aus beiden Armen auf einem polarisierenden Strahlteiler (PBS) kombiniert, so dass diese Photonen gemeinsam in einer Richtung aus dieser Platte austreten.

7. Das System nach einem der Ansprüche 1-6, **dadurch gekennzeichnet, dass** in beiden Mach-Zehnder-Interferometern (MZI) die Präzisionsschrauben zur Einstellung der Position und Neigung der Spiegel (7) vorhanden sind.

8. Das System nach einem der Ansprüche 1-7, **dadurch gekennzeichnet, dass** der Multimode-Quantenspeicher in der magneto-optischen Falle (MOT) optisch gekühlte Alkalimetallatome (IUPAC-Gruppe 1) in Gasform, insbesondere als Gemische von natürlich vorkommenden Isotopen oder in Form von reinen Isotopen der folgenden Elemente: Lithium, insbesondere $^6$Li oder $^7$Li, Natrium, insbesondere $^{23}$Na, Kalium, insbesondere $^{39}$K oder $^{41}$K, Rubidium, insbesondere $^{85}$Rb oder $^{87}$Rb, Cäsium, insbesondere $^{133}$Cs, umfasst.

9. Das System nach einem der Ansprüche 1-8, **dadurch gekennzeichnet, dass** der Strahl des Lasers W im Uhrzeigersinn zirkular polarisiert und von dem Übergang F=1→ F'=2 in der D2-Rubidium-87-Linie um 20-30 MHz, d.h. im Frequenzbereich von 384230484 MHz + 4272 MHz - 73 MHz $\pm$ 30 MHz, rot abgestimmt ist.

10. Das System nach einem der Ansprüche 1-9, **dadurch gekennzeichnet, dass** der Strahl des Lasers R gegen den Uhrzeigersinn zirkular in Resonanz mit dem Übergang F=2→F'=2 in der D1-Rubidium-87-Linie, d.h. im Frequenzbereich von 377107463 MHz - 2563 MHz + 306 MHz $\pm$ 10 MHz, polarisiert ist.

11. Das System nach einem der Ansprüche 1-10, **dadurch gekennzeichnet, dass** es mindestens eine Quadrupolspule umfasst, die einen Gradienten von mindestens 10 Gauss/cm in den Richtungen x und y und von mindestens 1 Gauss/cm in der Richtung z erzeugen kann.

12. Das System nach einem der Ansprüche 1-11, **dadurch gekennzeichnet, dass** die Querabmessung der kalten Atomwolke mehr als 0,2×0,2 mm, vorzugsweise 0,5×0,5 mm, und die Längsabmessung dieser Wolke mehr als 5 mm, vorzugsweise 10 mm, beträgt.

13. Ein Verfahren zur Erzeugung verschränkter Photonenpaare in einem Multimode-Quantenspeicher zur Wiederholung eines Quantensignals über eine bestimmte Entfernung, das in dem System nach einem der vorhergehenden Ansprüche implementiert ist und die folgenden Schritte umfasst:

a) Alkalimetallatome (IUPAC-Gruppe 1), in gasförmiger Form, insbesondere als Gemische natürlich vorkommender Isotope oder in Form reiner Isotope der folgenden Elemente: Lithium, insbesondere $^6$Li oder $^7$Li, Natrium, insbesondere $^{23}$Na, Kalium, insbesondere $^{39}$K oder $^{41}$K, Rubidium, insbesondere $^{85}$Rb oder $^{87}$Rb, Cäsium, insbesondere $^{133}$Cs, vorzugsweise Rubidium-87-Atome, werden in einer magneto-optischen Falle (MOT), insbesondere unter Verwendung des Magnetfeldes einer Quadrupolspule und kühlender Laserstrahlen, gefangen;
b) Atome werden optisch mit einem Laserstrahl in ihren Grundzustand, vorzugsweise in Rubidium-87 in den Zustand $5S_{1/2}$, F = 1, $m_F$ = -1, gepumpt;
c) Photonen A werden mit Hilfe eines Pulses des Lasers W erzeugt, der Schreiblaser erzeugt Anregungen mit einer Wellenlänge im Bereich von 775-785 nm, vorzugsweise 780 nm, diese Pulse dauern 50-500 ns, vorzugsweise 100-300 ns, und die Photonen A durchlaufen ein Mach-Zehnder-Interferometer (MZI);
d) das Eintreffen einer Anforderung zum Ablesen abgewartet wird,

**dadurch gekennzeichnet, dass**
das Verfahren ferner den Schritt umfasst:
e) Photonen B werden mit Hilfe eines Pulses vom Laser R gelesen, der einen Laserstrahl mit einer Wellenlänge im Bereich von 790-800 nm, vorzugsweise 795 nm, emittiert, die Pulse dauern vorzugsweise 50-500 ns, am meisten bevorzugt 100-300 ns, und die Photonen B durchlaufen ein Mach-Zehnder-Interferometer (MZI), wobei in der magneto-optischen Falle (MOT) ein Gas aus lasergekühlten Atomen erzeugt wird, das beim Beleuchten mit Laserlicht paarweise verschränkte Photonen (A und B) in mindestens 10 verschiedenen Richtungen, vorzugsweise 1000 Richtungen, mit einer einstellbaren Verzögerung von mehr als 50 Nanosekunden, vorzugsweise im Bereich von 50-100 Mikrosekunden, erzeugt und aussendet, und mit Hilfe von Mach-Zehnder-Interferometern (MZI) 2M optische Kanäle paarweise zu M optischen Kanälen kombiniert werden, wobei immer ein Kanal des Paares H-polarisiert und der andere Kanal W-polarisiert ist, so dass ein multimodaler, in der Polarisation verschränkter Zustand erzeugt wird.

14. Das Verfahren nach Anspruch 13, **dadurch gekennzeichnet, dass** der winkelmultiplexierte Multimoden-Quantenspeicher Photonen in verschiedenen Richtungen/Moden emittiert, wobei ein erstes Photon in einer zufälligen Richtung unter mindestens 10 verschiedenen verfügbaren Richtungen emittiert wird und dann ein zweites Photon in einer eng korrelierten Richtung, vorzugsweise entgegengesetzt zum ersten Photon, emittiert wird, und in der Periode zwischen dem ersten Photon und dem zweiten Photon die Information über die Emissionsrichtung als Quantensignal in Form eines Spinwellenvektors eines Ensembles kalter Atome codiert wird.

15. Das Verfahren nach Anspruch 13 oder 14, **dadurch gekennzeichnet, dass** der Quantenspeicher beim Beleuchten der Wolke aus kalten Atomen mit Pulsen des Schreib- (W) und Leselasers (R) aufgrund des Raman-Effekts Photonen emittiert, die in Richtung der Kanäle (A) bzw. (B) gestreut werden.

## Revendications

1. Un système pour générer des paires de photons intriqués en polarisation pour répéter un signal quantique sur une distance, comprenant une mémoire quantique multimode qui comprend un piège magnéto-optique (MOT) équipé de bobines magnétiques pour retenir des atomes, des lasers de refroidissement, des lasers de pompage pour un éclairage supplémentaire du piège, ainsi qu'un laser d'écriture (W) et un laser de lecture (R), dans lequel la mémoire quantique est couplée optiquement à deux interféromètres de Mach-Zehnder (MZI) alignés dans un axe sur les deux côtés de la mémoire quantique, et entre la mémoire quantique et chacun des interféromètres de Mach-Zehnder (MZI), il y a un objectif, au moins un filtre et des plaques d'onde, **caractérisé en ce que** le piège magnéto-optique (MOT) est configuré pour produire un gaz d'atomes refroidis par laser, éclairé par une lumière laser, qui, pendant l'éclairage, génère et émet des photons intriqués par paires (A et B) dans au moins 10 directions différentes, de préférence 1000 directions, dans le chemin optique de chaque direction des photons (A et B) il y a un objectif dont l'ouverture angulaire est comprise entre 1° et 10°, de préférence 5°, qui est situé entre le piège magnéto-optique (MOT) et l'interféromètre de Mach-Zehnder (MZI), tandis que les interféromètres de Mach-Zehnder (MZI) sont alignés l'un par rapport à l'autre et configurés pour apparier des canaux dans les chemins optiques, où toujours la moitié des canaux est polarisée en H et l'autre moitié est polarisée en W.

2. Le système selon la revendication 1, **caractérisé en ce que** dans le chemin optique des photons individuels A et B, il y a des filtres d'interférence et/ou d'absorption pour arrêter le faisceau lumineux des lasers W et R, respectivement, et laisser passer les photons A et B, et de préférence ces filtres comprennent consécutivement: un filtre d'interférence et un filtre d'absorption atomique.

3. Le système selon la revendication 1 ou 2, **caractérisé en ce que** les lasers d'écriture W et de lecture R sont dirigés vers le piège magnéto-optique (MOT) à l'opposé l'un de l'autre et sont configurés pour émettre des faisceaux éclairant uniformément le nuage d'atomes froids à un angle de 1-10°, plus préférablement de 1-5°, par rapport à l'axe du système, de sorte qu'il est possible d'arrêter la majorité de la lumière laser avec une ouverture dans le plan focal de l'objectif.

4. Le système selon l'une quelconque des revendications 1 à 3, **caractérisé en ce que** la mémoire quantique est équipée de deux interféromètres de Mach-Zehnder (MZI) pour convertir 2M canaux de mémoire en M canaux de mémoire en générant des états intriqués en polarisation des photons émis.

5. Le système selon l'une quelconque des revendications 1 à 4, **caractérisé en ce que** entre l'interféromètre de Mach-Zehnder (MZI) et le piège magnéto-optique (MOT), dans le chemin optique, il y a, en outre, une plaque demi-onde (HWP) et/ou une plaque quart d'onde supplémentaire (QWP) configurée pour convertir la polarisation des photons émis depuis la mémoire à polarisation horizontale ou verticale.

**6.** Le système selon l'une quelconque des revendications 1 à 5, **caractérisé en ce que** dans l'un des bras de l'interféromètre de Mach-Zehnder (MZI), une plaque demi-onde supplémentaire (HWP) est prévue, configurée pour combiner les photons provenant des deux bras sur un cube séparateur de faisceau polarisant (PBS), de sorte que ces photons sortent de cette plaque ensemble dans une seule direction.

**7.** Le système selon l'une quelconque des revendications 1 à 6, **caractérisé en ce que** dans les deux interféromètres de Mach-Zehnder (MZI), il y a des vis de précision pour régler la position et l'inclinaison des miroirs (7).

**8.** Le système selon l'une quelconque des revendications 1 à 7, **caractérisé en ce que** la mémoire quantique multimode comprend, dans le piège magnéto-optique (MOT), des atomes de métaux alcalins (groupe 1 de l'UICPA) refroidis optiquement, sous forme gazeuse, notamment sous forme de mélanges d'isotopes naturels ou sous forme d'isotopes purs des éléments suivants: lithium, notamment $^6$Li ou$^7$Li, sodium, notamment $^{23}$Na, potassium, notamment $^{39}$K ou $^{41}$K, rubidium, notamment $^{85}$Rb ou $^{87}$Rb, césium, notamment $^{133}$Cs.

**9.** Le système selon l'une quelconque des revendications 1 à 8, **caractérisé en ce que** le faisceau du laser W est polarisé circulairement dans le sens des aiguilles d'une montre et désaccordé vers le rouge à partir de la transition F=1→ F'=2 sur la raie D2 du rubidium-87 de 20 à 30 MHz, c'est-à-dire dans le domaine de fréquence de 384230484 MHz + 4272 MHz - 73 MHz $\pm$ 30 MHz.

**10.** Le système selon l'une quelconque des revendications 1 à 9, **caractérisé en ce que** le faisceau du laser R est polarisé circulairement dans le sens inverse des aiguilles d'une montre en résonance avec la transition F=2→ F'=2 sur la raie D1 du rubidium-87, c'est-à-dire dans le domaine de fréquence de 377107463 MHz - 2563 MHz + 306 MHz $\pm$ 10 MHz.

**11.** Le système selon l'une quelconque des revendications 1 à 10, **caractérisé en ce qu'il** comprend au moins une bobine quadripolaire capable de générer un gradient d'au moins 10 gauss/cm dans les directions x et y et d'au moins 1 gauss/cm dans la direction z.

**12.** Le système selon l'une quelconque des revendications 1 à 11, **caractérisé en ce que** la dimension transversale du nuage froid d'atomes est supérieure à 0,2x0,2 mm, de préférence 0,5x0,5 mm, et la dimension longitudinale de ce nuage est supérieure à 5 mm, de préférence 10 mm.

**13.** Une méthode pour générer des paires de photons intriqués dans une mémoire quantique multimode pour répéter un signal quantique sur une distance, implantée dans le système selon l'une quelconque des revendications précédentes, comprenant les étapes suivantes:

a) atomes de métaux alcalins (groupe 1 de l'UICPA), sous forme gazeuse, notamment sous forme de mélanges d'isotopes naturels ou sous forme d'isotopes purs des éléments suivants: lithium, notamment $^6$Li ou $^7$Li, sodium, notamment $^{23}$Na, potassium, notamment $^{39}$K ou $^{41}$K, rubidium, notamment $^{85}$Rb ou $^{87}$Rb, césium, notamment $^{133}$Cs, de préférence des atomes de rubidium-87, sont piégés dans un piège magnéto-optique (MOT), notamment en utilisant le champ magnétique d'une bobine quadripolaire et des faisceaux laser de refroidissement,
b) les atomes sont pompés optiquement avec un faisceau laser vers leur état fondamental, de préférence dans le rubidium-87 vers l'état 5 $S_{1/2}$, F = 1, $m_F$ = -1;
c) les photons A sont générés au moyen d'une impulsion du laser W, le laser d'écriture génère des excitations avec une longueur d'onde dans la gamme de 775-785 nm, de préférence 780 nm, ces impulsions durent 50-500 ns, de préférence 100-300 ns, et les photons A passent à travers un interféromètre de Mach-Zehnder (MZI);
d) l'arrivée d'une demande de lecture est attendue;

**caractérisée en ce que**

le méthode comprend en outre l'étape:
e) les photons B sont lus au moyen d'une impulsion du laser R qui émet un faisceau laser avec une longueur d'onde dans la gamme de 790-800 nm, de préférence 795 nm, les impulsions durent de préférence 50-500 ns, plus préférablement 100-300 ns, et les photons B passent à travers un interféromètre de Mach-Zehnder (MZI), dans laquelle dans le piège magnéto-optique (MOT) est produit un gaz d'atomes refroidis par laser, éclairé par la lumière laser, qui, lorsqu'il est éclairé, génère et émet des photons intriqués par paire (A et B) dans au moins 10 directions différentes, de préférence 1000 directions, avec un retard réglable de plus de 50 nanosecondes, de préférence dans la plage de 50 à 100 microsecondes, et au moyen d'interféromètres de Mach-Zehnder (MZI), 2M canaux optiques sont combinés par paires en M canaux optiques, dans lesquels toujours un canal de la paire est polarisé en H et l'autre canal est polarisé en W, de sorte qu'un état multimode intriqué en polarisation est généré.

14. La méthode selon la revendication 13, **caractérisée en ce que** la mémoire quantique multimode multiplexée en angle émet des photons dans différentes directions/modes, dans laquelle un premier photon est émis dans une direction aléatoire parmi au moins 10 directions différentes disponibles, puis un second photon est émis dans une direction étroitement corrélée, de préférence opposée au premier photon, et dans la période entre le premier photon et le second photon, l'information concernant la direction d'émission est codée comme un signal quantique sous la forme d'un vecteur d'onde de spin d'un ensemble d'atomes froids.

15. La méthode selon la revendication 13 ou 14, **caractérisée en ce que** la mémoire quantique émet des photons diffusés dans la direction des canaux (A) et (B), respectivement, lorsqu'on illumine le nuage d'atomes froids avec des impulsions des lasers d'écriture (W) et de lecture (R) en raison de la diffusion Raman.

Fig. 1

Fig. 2

Fig. 3a

Fig. 3b

| | | |
|---|---|---|
| | magnetic field | |
| | repumping laser | |
| | cooling laser | |
| optical pumping | 900ns | |
| pulse of laser W | 100 ns | |
| clearing and read-out (R) | 900 ns | 300÷900 ns |
| signal from the photodiode | | |
| I-sCMOS triggering | | |

one cycle ≈ 3 μs                           300 repetitions

Fig. 3c

Fig. 4a

Fig. 4b

Fig. 4c

Fig. 5

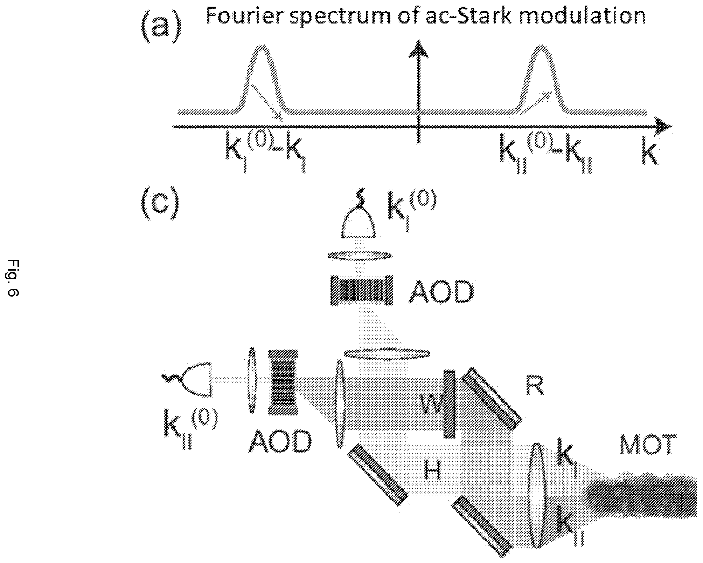

Fig. 6

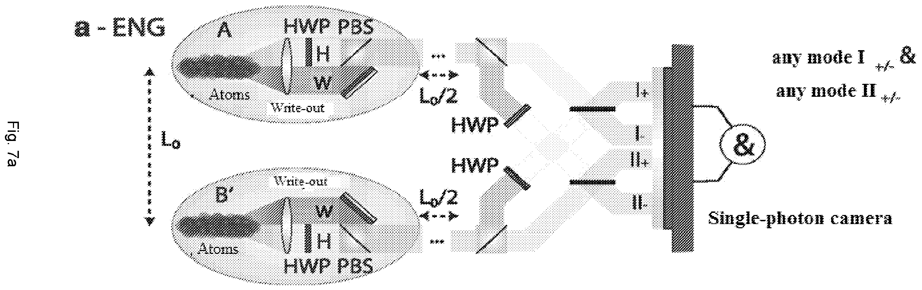

Fig. 7a

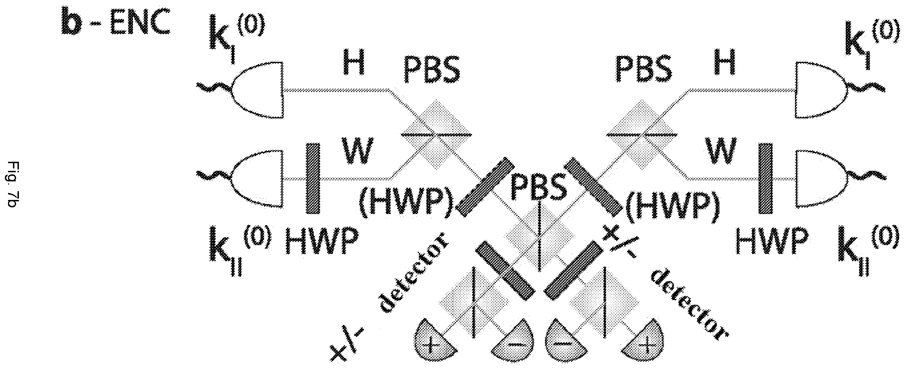

Fig. 7b

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8835833 B2
- US 2013048846 A1
- EP 2909955 B1
- EP 2529503 B1
- WO 2017197235 A2
- US 20180254085 A1
- WO 2011000444 A1
- US 2020050959 A

### Non-patent literature cited in the description

- **BENNETT ; CHARLES H. ; BRASSARD ; GILLES.** Proceedings of the IEEE International Conference on Computers, Systems, and Signal Processing, Bangalore. *Quantum Cryptography: Public key distribution and coin tossing,* 1984, 175
- **ARTHUR K. EKERT.** Phys. Rev. Lett. *Quantum cryptography based on Bell's theorem,* 1991, vol. 67, 661
- **Q. ZHANG et al.** Opt. Express. *Large scale quantum key distribution: challenges and solutions,* 2018, vol. 26, 24260-24273
- **S.-K. LIAO et al.** Nature. *Satellite-to-ground quantum key distribution,* 2017, vol. 549, 43-47
- **C. E. SHANNON.** *A mathematical theory of communication,* 1948, vol. 27, 379
- **BRIEGEL ; H.-J. ; DÜR ; W., CIRAC ; J. I. ; ZOLLER, P.** Physical Review. *Quantum Repeaters: The Role of Imperfect Local Operations in Quantum Communication,* 1998, vol. 81 (26), 5932-5935
- **DUAN, L. ; LUKIN, M. ; CIRAC, J. et al.** Nature. *Long-distance quantum communication with atomic ensembles and linear optics,* 2001, vol. 414, 413-418
- **M. PARNIAK et al.** *Nature Communications,* 2017, vol. 8, 2140
- **B. M. SPARKES et al.** *New J. Phys.,* 2013
- **JIAN-WEI PAN et al.** *Phys. Rev.,* 2007, vol. 98, 240502
- **N. SANGOUARD ; C. SIMON ; H. DE RIEDMATTEN ; N. GISIN.** *Quantum repeaters based on atomic ensembles and linear optics,* 2011, vol. 83, 33-80
- **MICHAL PARNIAK et al.** Quantum optics of spin waves through ac Stark modulation. 16 April 2018
- Quantum storage of orbital angular momentum entanglement in cold atomic ensembles. **BAO-SEN SHI et al.** JOURNAL OF PHYSICS B, ATOMIC MOLECULAR AND OPTICAL PHYSICS. INSTITUTE OF PHYSICS PUBLISHING, 09 January 2018, vol. 51, 32004
- **DANIELE COZZOLINO et al.** High-dimensional quantum communication: benefits, progress, and future challenges. 16 October 2019
- **BENNETT ; CHARLES H. ; BRASSARD.** Proceedings of the IEEE International Conference on Computers, Systems, and Signal Processing, Bangalore. *Gilles. Quantum Cryptography: Public key distribution and coin tossing,* 1984, 175
- **ARTUR K. EKERT.** *Quantum cryptography based on Bell's theorem,* 1991, vol. 67, 661
- **DUAN, L. ; LUKIN, M. ; CIRAC ; J. ZOELLER, P.** *Nature,* 2001, vol. 414, 413-418
- **W. WOOTTERS ; W. ŻUREK.** Nature. *A Single Quantum Cannot be Cloned,* 1982, vol. 299, 802-803
- **D. DIEKS.** *Communication by EPR devices,* 1982, vol. 92 (6), 271-272
- **W. WASILEWSKI ; C. RADZEWICZ ; R. FRANKOWSKI ; K. BANASZEK.** *Statistics of multiphoton events in spontaneous parametric down-conversion,* 2008, vol. 78
- **J.F. CLAUSER ; M.A. HORNE ; A. SHIMONY ; R.A. HOLT.** *Proposed experiment to test local hidden-variable theories,* 1969, vol. 23 (15), 880-4